(19) Europäisches Patentamt
European Patent Office
Office européen des brevets

(11) **EP 2 330 818 A1**

(12) **EUROPEAN PATENT APPLICATION**
published in accordance with Art. 153(4) EPC

(43) Date of publication:
08.06.2011 Bulletin 2011/23

(51) Int Cl.:
*H04N 7/01* (2006.01)

(21) Application number: 09811367.3

(22) Date of filing: 17.07.2009

(86) International application number:
PCT/JP2009/062948

(87) International publication number:
WO 2010/026838 (11.03.2010 Gazette 2010/10)

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA RS

(30) Priority: 04.09.2008 JP 2008227626
04.09.2008 JP 2008227627

(71) Applicant: **Japan Science and Technology Agency**
**Saitama 332-0012 (JP)**

(72) Inventors:
• **TORAICHI, Kazuo**
**Tsukuba City**
**Ibaraki 305-0031 (JP)**
• **WU, Dean**
**Tsukuba City**
**Ibaraki 305-0044 (JP)**
• **GAMBA, Jonah**
**Tsukuba City**
**Ibaraki 305-0031 (JP)**
• **OMIYA, Yasuhiro**
**Tsukuba City**
**Ibaraki 300-3261 (JP)**

(74) Representative: **Müller - Hoffmann & Partner**
**Patentanwälte**
**Innere Wiener Strasse 17**
**81667 München (DE)**

(54) **FRAME RATE CONVERTING APPARATUS AND CORRESPONDING POINT ESTIMATING APPARATUS, CORRESPONDING POINT ESTIMATING METHOD AND CORRESPONDING POINT ESTIMATING PROGRAM**

(57) For each of a plural number of pixels in a reference frame, a corresponding point estimation unit (2) estimates a corresponding point in each of a plural number of picture frames differing in time. A first gray scale value generation unit (3) finds the gray scale value of each pixel from the gray scale values of the neighboring pixels for each corresponding point in each picture frame estimated. A second gray scale value generation unit (4) approximates the gray level of a locus of corresponding points, by a fluency function, from the gray scale values of the corresponding points at each picture frame estimated to find each gray scale value of the corresponding point in the picture frame for interpolation from the above function. From the gray scale value of each corresponding point in the frame for interpolation, a third gray scale value generation unit (5) generates a gray scale value of each pixel in the picture frame for interpolation.

FIG.1

**Description**

Technical Field

This invention relates to a frame rate conversion device for converting the frame rate of pictures to a desired optional frame rate. This invention also relates to a device, a method and a program for estimating corresponding points between frame pictures in the frame rate conversion device.

The present Application claims priority rights based on Japanese Patent Applications 2008-227626 and 2008-227627 filed in Japan on September 4, 2008. These applications of the senior filing date are to be incorporated by reference in the present application.

Background Art

Recently, as the network distribution of motion pictures, television broadcast or animation cartoons is becoming more popular, there has come to be felt a need to enhance the definition of displayed pictures.

Heretofore, in definition enhancing conversion processing, aimed to cope with the increasing demand for higher definition of pictures displayed on a TV receiver or monitor, searches are being made into methods of finding out correlation from changes in the discrete gray scale values at pixel points taken on the frame-by-frame basis.

For example, in displaying a picture on a high definition television receiver or monitor, there are known methods of linear intrapolation or multi-frame deterioration back conversion, as techniques for resolution enhancing conversion for increasing the number of pixel data to that on a panel (see for example Japanese Laid-Open Patent Publication 2008-988033).

In the method of multi-frame deterioration back conversion, attention is directed to the fact that an object being captured appears in another frame as well. The motion of the object is detected with the precision smaller than the pixel-to-pixel distance. A plurality of sample values, whose positions are delicately shifted from the same local portion of the object, is then found to enhance the resolution.

As a technique regarding the creation of a digital picture, there is such a technique of converting a number of pictures, as picked up on a film, or picture signals as recorded with an equivalent number of frames, into pictures of variable frame rates. This technique has been known by e.g., Patent Document 2. In particular, when a picture of the progressive picture signal system at a rate of 24 frames per second is converted into a picture of the progressive picture signal system at a rate of 60 frames per second, conversion by the 2:3 pull-down conversion system is routinely used (see for example the Japanese Laid-Open Patent Publication 2003-284007).

There has also recently come to be known a frame rate conversion processing in which a frame sequence signal is newly generated to improve the dynamic picture performance. The new frame sequence signal is generated in the frame rate conversion device by combining a plurality of frames contained in an input picture signal with frames for interpolation generated in the picture frame conversion device using motion vectors of the input picture signal (see for example the Japanese Laid-Open Patent Publication 2003-167103)..

In these days, marked progress has been made in the techniques of digital signals in the multi-media industry or IT (Information Technology) industry, especially the techniques of communication, broadcasting, recording mediums, such as CD (Compact Disc), DVD (Digital Versatile Disc), medical or printing applications handling moving pictures, still pictures or voice. Signal encoding for compression, aimed to decrease the volume of the information, represents a crucial part of the digital signal techniques handling the moving pictures, still images and voice. The encoding for compression is essentially based on the Shannon's sampling theorem as its supporting signal theory and on a more recent theory known as wavelet transform. In music CD, linear PCM (Pulse Code Modulation), not accompanied by compression, is also in use. However, the basic signal theory is again the Shannon's sampling theorem.

Heretofore, MPEG has been known as a compression technique for moving pictures or animation pictures. With the coming into use of the MPEG-2 system in digital broadcast or DVD, as well as the MPEG-4 system in mobile communication or so-called Internet streaming of the third generation mobile phone, the digital compression technique for picture signals has recently become more familiar. The background is the increasing capacity of storage media, increasing speed of the networks, improved processor performance and the increased size of system LSIs as well as low cost. The environment that supports the systems for application in pictures in need of the digital compression is recently more and more in order.

The MPEG2 (ISO (International Organization for Standardization)/ IEC (International Electrotechnical Commission) 13818-2) is a system defined as a general-purpose picture encoding system. It is a system defined to cope with both the interlaced scanning and progressive scanning and to cope with both the standard resolution pictures and high resolution pictures. This MPEG2 is now widely used in a broad range of applications including the applications for professional and consumer use. In the MPEG2, standard resolution picture data of $720 \times 480$ pixels of the interlaced scanning system may be compressed to pixels of 4 to 8 Mbps bit rate, whilst high resolution picture data of $1920 \times 1080$

pixels of the interlaced scanning system may be compressed to pixels of 18 to 22 Mbps bit rate. It is thus possible to assure a high compression rate with a high picture quality.

In encoding moving pictures in general, the information volume is compressed by reducing the redundancy along the time axis and along the spatial axis. In inter-frame predictive coding, motion detection and creation of predictive pictures are made on the block basis as reference is made to forward and backward pictures. It is the difference between the picture as an object of encoding and a predictive picture obtained that is encoded. It should be noted that a picture is a term that denotes a single picture. Thus, it means a frame in the progressive encoding and a frame or a field in the interlaced scanning. The interlaced picture denotes a picture in which a frame is made up of two fields taken at different time points. In the processing of encoding or decoding the interlaced picture, a sole frame may be processed as a frame per se or as two fields. The frame may also be processed as being of a frame structure from one block in the frame to another, or being of a two-field structure.

Disclosure of the Invention

Problem to be solved by the Invention

A conventional A-D conversion/ D-A conversion system, which is based on the Shannon's sampling theorem, handles a signal band-width-limited by the Nyquist frequency. In this case, to convert a signal, turned into discrete signals by sampling, back into a time-continuous signal, a function that recreates a signal within the limited frequency range (regular function) is used in D-A conversion.

One of the present inventors has found that various properties of the picture signal or the voice signal, such as a picture (moving picture), letters, figures or a picture of natural scenery, may be classified using a fluency function. According to the corresponding theory, the above mentioned regular function, which is based on the Shannon's sampling theorem, is among the fluency functions, and simply fits with a sole property out of a variety of properties of a signal. Thus, if the large variety of the signals are treated with only the regular function which is based upon the Shannon's sampling theorem, there is a fear that restrictions are imposed on the quality of the playback signals obtained after D/A conversion. The theory of wavelet transform, a fluency function space, represents a signal using a mother wavelet that decomposes an object in terms of the resolution. However, since a mother wavelet optimum to a signal of interest is not necessarily available, there is again a fear that restrictions are imposed on the quality of the playback signals obtained on D/A conversion.

The fluency function is a function classified by a parameter m, m being a positive integer of from 1 to $\infty$. It is noted that m denotes that the function is continuously differentiable only by (m-2) times. Since the above regular function is differentiable any number of times, m = $\infty$. Moreover, the fluency function is constituted by a degree (m-1) function. In particular, the fluency DA function, out of the fluency functions, has its value determined by a k'th sampling point k$\tau$ of interest, where $\tau$ is the sample interval. At the other sampling points, the function becomes 0.

The total of the properties of a signal may be classified by a fluency function having a parameter m, which parameter m determines the classes. Hence, the fluency information theory, making use of the fluency function, comprehends the Shannon's sampling theorem or the theory of wavelet transform each of which simply represent a part of the signal properties. Viz., the fluency information theory may be defined as a theory system representing a signal in its entirety.

By using such function, a high quality playback signal, not bandwidth-limited by the Shannon's sampling theorem, may be expected to be obtained on D-A conversion for the entire signal.

Meanwhile, the method in related art for finding the correlation from changes in the discrete gray scale values in the frame-based pixel points suffers from a problem that corresponding points become offset in case a corresponding picture exists between pixels.

On the other hand, there is a demand for converting the frame rate of 24 frames per second of a motion picture to 30 frames per second of video, or for converting a TV picture to a picture of a higher frame rate of 60 to 120 frames/second by way of enhancing the definition, There is also a demand for converting the frame rate to that of a mobile phone that is 15 frames per second. However, the mainstream method is a method by frame decimation or by intrapolation of previous and following frames to generate a new frame.

However, the methods in related art of frame decimation or of intrapolation by forward or backward frames suffer from a problem that picture movement is not smooth or the picture is not linear.

In view of the above mentioned drawback of the related art, it is desirable to provide a frame rate conversion device in which a clear picture with a smooth motion may be reproduced even though the number of frames is increased or decreased.

It is desirable to provide a device for corresponding point estimation whereby it is possible to accurately grasp a corresponding point between frame pictures in the frame rate conversion device, and a method for corresponding point estimation as well as a program for corresponding point estimation.

In moving pictures, it may occur frequently that like scenes are encountered before and after a given frame. Hence, the frame rate may be enhanced by using this property. Viz., the different information is used to enhance the frame rate to improve the picture quality. Local corresponding points between frames are estimated and corresponding picture points are intrapolated to constitute an intrapolated frame of high picture quality.

According to an embodiment of the present invention, corresponding picture points between frames are traced and temporal transition of the corresponding picture points is expressed by a function. A new frame is generated under interpolation by a function based on a ratio of the number of the original frame(s) to the number of frames for conversion, whereby a clear picture signal performing the smooth motion may be obtained even though the number of frames is increased or decreased.

In one aspect, the frame rate conversion device includes a corresponding point estimation processor for estimating, for each of a large number of pixels in a reference frame, a corresponding point in each of a plurality of picture frames differing in time. The frame rate conversion device also includes a first processor of gray scale value generation of finding, for each of the corresponding points in each picture frame estimated, the gray scale value of each corresponding point from gray scale values representing the gray level of neighboring pixels. The frame rate conversion device also includes a second processor of gray scale value generation of approximating, for each of the pixels in the reference frame, from the gray scale values of the corresponding points in the picture frames estimated, the gray scale value of the locus of the corresponding points by a fluency function, and of finding, from the function, the gray scale values of the corresponding points of a frame for interpolation. The frame rate conversion device further includes a third processor of gray scale value generation of generating, from the gray scale value of each corresponding point in the picture frame for interpolation, the gray scale value of neighboring pixels of each corresponding point in the frame for interpolation.

In another aspect, the present invention provides a frame rate conversion device including a first function approximation unit for approximating the gray scale distribution of a plurality of pixels in reference frames by a function, and a corresponding point estimation unit for performing correlation calculations, using a function of gray scale distribution, approximated by the first function approximation unit in a plurality of the reference frames differing in time, to set respective positions that yield the maximum value of the correlation as the corresponding point positions in the respective reference frames. The frame rate conversion device also includes a second function approximation unit for putting corresponding point positions in each reference frame as estimated by the corresponding point estimation unit into the form of coordinates in terms of the horizontal and vertical distances from the point of origin of each reference frame, converting changes in the horizontal and vertical positions of the coordinate points in the reference frames different in time into time-series signals, and approximating the time-series signals of the reference frames by a function. The frame rate conversion device further includes a third function approximation unit for setting, for a picture frame of interpolation at an optional time point between the reference frames, a position in the picture frame for interpolation corresponding to the corresponding point positions in the reference frames, using the function approximated by the second function approximation unit. The third function approximation unit finds a gray scale value at the corresponding point position of the picture frame for interpolation by interpolation with gray scale values at the corresponding points of the reference frames. The third function approximation unit causes the first function approximation to fit with the gray scale value of the corresponding point of the picture frame for interpolation to find the gray scale distribution in the neighborhood of the corresponding point to convert the gray scale distribution in the neighborhood of the corresponding point into the gray scale values of the pixel points in the picture frame for interpolation.

In a further aspect, the present invention provides a corresponding point estimation device mounted as a corresponding point estimation processor in the frame rate conversion device. The corresponding point estimation device includes a first partial picture region extraction means for extracting a partial picture region of a frame picture, and a second partial picture region extraction means for extracting a partial picture region of another frame picture consecutive to the frame picture. The partial picture is similar to the partial picture extracted by the first partial picture region extraction means. The corresponding point estimation device also includes a function approximation means for selecting the partial picture regions extracted by the first and second partial picture region extraction means so that partial picture regions will have approximately the same picture state, and for expressing the gray scale values of each of the partial pictures rendered into a function by a piece-wise polynomial to output the function. The corresponding point estimation device also includes a correlation value calculation means for calculating the correlation value of outputs of the function approximation means, and offset value calculation means for calculating an offset value of a picture that gives a maximum value of correlation calculated by the correlation value calculation means to output the calculated value as an offset value of the corresponding point.

In a further aspect, the present invention provides a method for estimation of a corresponding point executed by the above corresponding point estimation device. The method includes a first partial picture region extraction step of extracting a partial picture region of the frame picture, and a second partial picture region extraction step of extracting a partial picture region of another frame picture consecutive to the frame picture. The partial picture region of the other frame picture is similar to the partial picture region extracted in the first partial picture region extraction step. The method also includes a function approximation step of selecting the partials regions extracted in the first and second partial picture region extraction steps so that the partial picture regions will have approximately the same picture state, and for expressing the gray scale values of each of the partial pictures rendered into the function by a piece-wise polynomial to output the function. The method also includes a correlation value calculation step of calculating a correlation value of an output obtained by the function approximation step, and an offset value calculation step of calculating an offset value of a picture that gives a maximum value of correlation calculated in the correlation value calculation step to output the maximum value calculated as an offset value of the corresponding point.

In yet another aspect, the present invention provides a program for allowing a computer, provided in the above corresponding point estimation device, to operate as a first partial picture region extraction means, a second partial picture region extraction means, a function approximation means, a correlation value calculation means and an offset value calculation means. The first partial picture region extraction means extracts a partial picture region in the frame picture, and the second partial picture region extraction means extracts a partial picture region of another frame picture consecutive to the frame picture. The partial picture region of the other frame picture is similar to the partial picture region extracted by the first partial picture region extraction means. The function approximation means selects the partial picture regions extracted by the first and second partial picture region extraction means so that the partial picture regions will have approximately the same picture state, and expresses the gray scale values of each of the partial pictures rendered into the function by a piece-wise polynomial to output the function. The correlation value calculation means calculates the correlation value of outputs of the function approximation means. The offset value calculation means calculates a picture position offset that yields the maximum value of correlation calculated by the correlation value calculation means to output the calculated value as an offset value of the corresponding point.

According to an embodiment of the present invention, corresponding picture points between frames are traced and temporal transition of the corresponding picture points is expressed by a function. A new frame is generated under interpolation by a function based on a ratio of the number of the original frame(s) to the number of frames for conversion, whereby a clear picture signal performing the smooth motion may be obtained even though the number of frames is increased or decreased.

Thus, according to the embodiment of the present invention, clear pictures performing the smooth motion may be displayed at a frame rate suited to the display device.

Moreover, according to an embodiment of the present invention, the gray level of a picture is grasped as a continuously changing state, and a partial picture region of a frame picture is extracted. A partial picture region of another frame picture consecutive to the first-stated frame picture is extracted. The partial picture region of this other frame picture is to be similar to the first-stated partial picture region. The picture state of the partial picture region of the other frame picture is to correspond to that of the partial picture region of the first-stated partial picture region. Each gray level of the respective pictures converted is expressed by a piece-wise polynomial as a function. The correlation of the outputs is calculated. The position offset of a picture which gives the maximum value of the values of the correlation calculated is found, and the value thus found is set as an offset value of the corresponding point. This gives a correct value of the corresponding point of the picture.

Thus, according to the embodiment of the present invention, it is possible to extract picture corresponding points which are not offset between frames. High resolution transform, such as compression coding, picture interpolation or frame rate conversion, may be made possible. It is also possible to cope with increase in the size of the television receiver or with enhanced definition of moving picture playback in a mobile terminal, thereby enhancing the use modes of the moving pictures.

Other advantages of the present invention will become apparent from the explanation of the Examples which will now be described in detail with reference to the drawings.

Brief Description of the Drawings

Fig. 1 is a block diagram showing an example formulation of a frame rate conversion device.

Figs.2A and 2B are schematic views showing the processing for enhancing the frame rate by the frame rate conversion device.

Fig.3 is a flowchart showing the sequence of operations for executing the processing for enhancing the frame rate by the frame rate conversion device.

Figs. 4A to 4D are schematic views for illustrating the contents of the processing for enhancing the frame rate carried out by the frame rate conversion device.

Figs.5A to 5C are schematic views for illustrating the processing for non-uniform interpolation by the frame rate conversion device.

Fig.6 is a graph for illustrating the processing of picture interpolation that determines the value of the position of a pixel newly generated at the time of converting the picture resolution.

Figs.7A and 7B are graphs showing examples of a uniform interpolation function and a non-uniform interpolation function, respectively.

Fig.8 is a schematic view for illustrating the contents of the processing for picture interpolation.

Fig.9 is a block diagram showing an example configuration of the enlarging interpolation processor.

Fig. 10 is a block diagram showing an example configuration of an SRAM selector of the enlarging interpolation processor.

Fig. 11 is a block diagram showing an example configuration of a picture processing block of the enlarging interpolation processor.

Figs. 12A and 12B are schematic views showing two frame pictures entered to a picture processing module in the enlarging interpolation processor.

Fig.13 is a flowchart showing the sequence of operations of enlarging interpolation by the enlarging interpolation processor.

Fig.14 is a block diagram showing an example configuration of the frame rate conversion device having the function of the processing for enlarging interpolation.

Fig.15 is a block diagram showing the configuration of a picture signal conversion system according to an embodiment of the present invention.

Fig.16 is a block diagram showing a system model used for constructing a pre-processor in the picture signal conversion system.

Fig.17 is a block diagram showing a restoration system model used for constructing the preprocessor in the picture signal conversion system.

Fig.18 is a flowchart showing a sequence of each processing of a characteristic of a reverse filter used in the pre-processor.

Fig. 19 is a block diagram showing the configuration of a compression encoding processor in the picture signal conversion system.

Fig.20 is a block diagram showing the configuration of a corresponding point estimation unit provided in the compression encoding processor.

Fig. 21 is a graph for illustrating the space in which to perform 2n-degree interpolation to which belongs the inter-frame-to-frame correlation function.

Figs.22A to 22D are schematic views showing the manner of determining the motion vector by corresponding point estimation by the corresponding point estimation unit.

Fig.23 is a schematic view for comparing the motion vector as determined by the corresponding point estimation by the corresponding point estimation unit to the motion vector as determined by conventional block matching.

Fig.24 is a schematic view for illustrating the point of origin of a frame picture treated by a motion function processor provided in the compression encoding processor.

Figs.25A to 25C are schematic views showing the motion of pictures of respective frames as motions of X-and Y-coordinates of the respective frames.

Fig.26 is a graph for illustrating the contents of the processing of estimating the inter-frame position.

Figs.27A and 27B are diagrammatic views showing example configurations of a picture data stream generated by MPEG coding and a picture data stream generated by an encoding processor in the picture signal conversion system.

Fig.28 is a diagrammatic view showing an example bit format of I- and P-pictures in a video data stream generated by the encoding processor.

Fig.29 is a diagrammatic view showing an example bit format of a D-picture in the video data stream generated by the encoding processor.

Figs.30A and 30B are graphs showing transitions of X-and Y-coordinates of corresponding points in the example bit format of the D-picture.

Fig. 31 is a graph schematically showing an example of calculating the X-coordinate values of each D-picture in a corresponding region from X-coordinate values of forward and backward pictures.

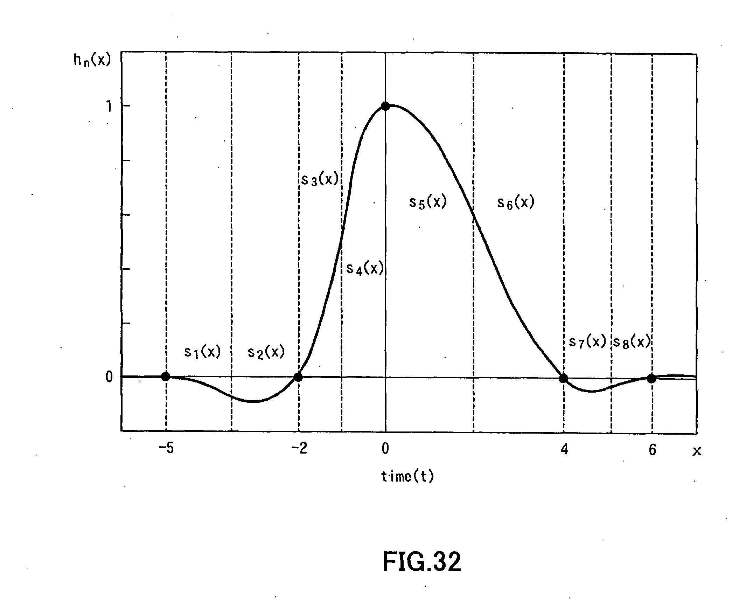

Fig.32 is a graph showing a class (m=3) non-uniform fluency interpolation function.

Fig.33 is a set of graphs showing examples of approach of high resolution interpolation.

Fig.34 is a schematic view showing a concrete example of a pixel structure for interpolation.

Figs.35(A), (B1), (C1), (B2), (C2) are schematic views for comparing intermediate frames generated by the above frame rate enhancing processing to intermediate frames generated by the conventional technique, wherein Figs. 35(A), (B1), (C1) show an example of conventional ca. 1/2 precision motion estimation and Figs.35(A), (B2), (C2) show an example of non-uniform interpolation.

Best Mode for Carrying out the Invention

Preferred embodiments of the present invention will now be described with reference to the drawings. It should be noted that the present invention is not to be limited to the embodiments now described and may be altered as appropriate within the range not departing from the scope of the invention.

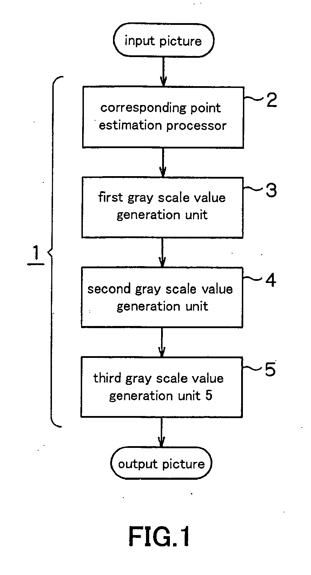

A frame rate conversion device 1 according to an embodiment of the present invention is constructed as shown for example in Fig. 1.

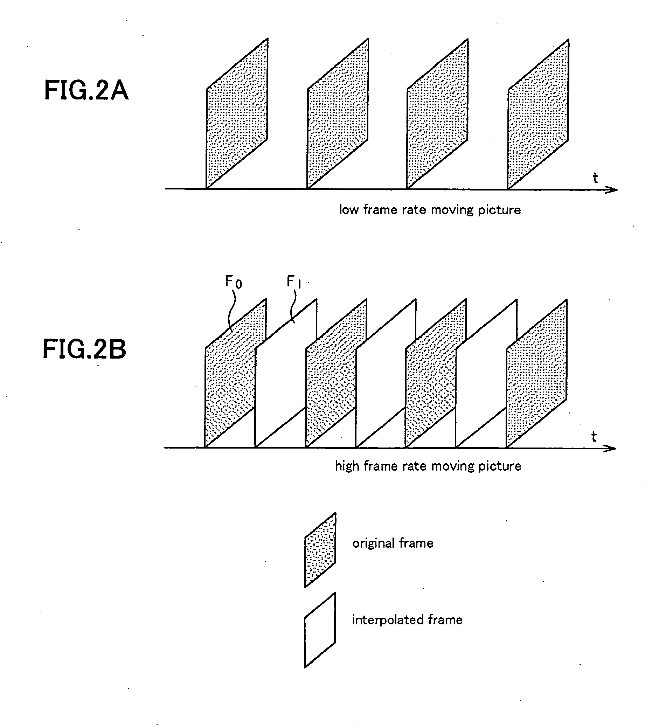

The present frame rate conversion device 1 introduces a frame for interpolations in-between original frames, as shown for example in Figs.2A and 2B. The frame rate may be enhanced by converting a moving picture of a low frame rate, 30 frames per second in the present example, as shown in Fig.2A, into a moving picture of a high frame rate, 60 frames per second in the present example, as shown in Fig.2B. The frame rate conversion device is in the form of a computer including a corresponding point estimation unit 2, a first gray scale value generation unit 3, a second gray scale value generation unit 4 and a third gray scale value generation unit 5.

In the present frame rate conversion device 1, the corresponding point estimation unit 2 estimates, for each of a large number of pixels in a reference frame, a corresponding point in each of a plurality of picture frames temporally different from the reference frame and from one another.

The first gray scale value generation unit 3 finds, for each of the corresponding points in the respective picture frames, as estimated by the corresponding point estimation unit 2, the gray scale value from gray scale values indicating the gray levels of neighboring pixels.

The second gray scale value generation unit 4 approximates, for each of the pixels in the reference frame, the gray levels on the locus of the corresponding points, based on the gray scale values of the corresponding points as estimated in the respective picture frames, by a fluency function. From this function, the second gray scale value generation unit finds the gray scale value of each corresponding point in each frame for interpolation.

The third gray scale value generation unit 5 then generates, from the gray scale value of each corresponding point in each frame for interpolation, the gray scale values of pixels in the neighborhood of each corresponding point in each frame for interpolation.

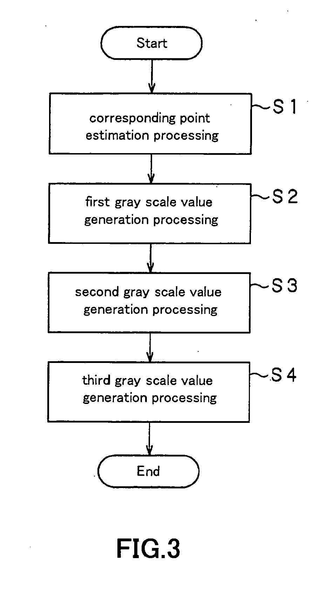

The frame rate conversion device 1 executes, by a computer, a picture signal conversion program as read out from a memory, not shown. The frame rate conversion device performs the processing in accordance with the sequence of steps S1 to S4 shown in the flowchart of Fig.3. Viz., using the gray scale value of each corresponding point, as estimated by corresponding point estimation, the gray scale value of each corresponding point of each frame for interpolation is generated by uniform interpolation. In addition, the gray scale values of the pixels at the pixel points in the neighborhood of each corresponding point in each frame for interpolation are generated by non-uniform interpolation, by way of processing for enhancing the frame rate.

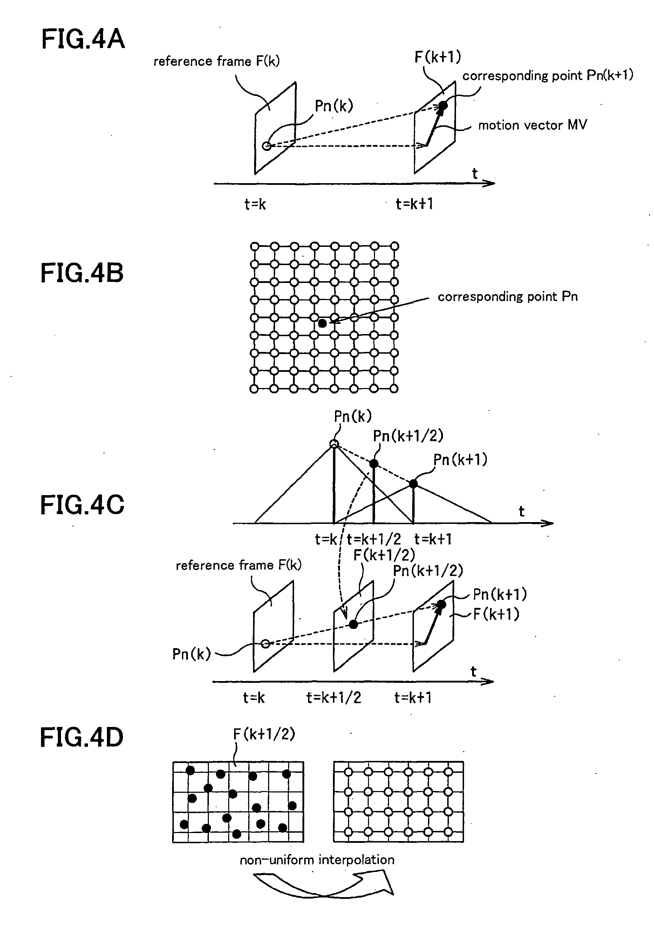

In more detail, in the present frame rate conversion device 1, a picture frame at time $t = k$ is set as a reference frame F(k), as shown in Fig. 4A. Then, for each of a large number of pixels Pn(k) in the reference frame F(k), motion vectors are found for each of a picture frame F(k+1) at time $t = k+1$, a picture frame F(k+2) at time $t = k+2$, ···, a picture frame F(k+m) at time $t = k+m$ to estimate corresponding points Pn(k+1), Pn(k+2), ···, Pn(k+m) in the picture frames F(k+1), F(k+2), ···, F(k+m), by way of performing the processing of estimating the corresponding points (step S1).

Then, for each of the corresponding points Pn(k+1), Pn(k+2). ···, Pn(k+m) in the picture frames F(k+1), F(k+2), ···, F(k+m), estimated in the above step S1, the gray scale value is found from the gray scale values representing the gray levels of the neighboring pixels, by way of performing the first processing for generation of the gray scale values, as shown in Fig. 4B (step S2).

Then, for each of a large number of pixels Pn(k) in the reference frame F(k), the second processing for generation of the gray scale values is carried out, as shown in Fig. 4C (step S3). In this second processing for generation of the gray scale values, the gray levels at the corresponding points Pn(k+1), Pn(k+2).···, Pn(k+m), generated in the step S2, viz., the gray levels on the loci of the corresponding points in the picture frames F(k+1), F(k+2), ···, F(k+m), are approximated by the fluency function. From this fluency function, the gray scale values of the corresponding points in the frames for interpolations intermediate between the picture frames F(k+1), F(k+2), ···, F(k+m) are found (step S3).

In the next step S4, the third processing for generation of the gray scale values is carried out, as shown in Fig. 4D. In this processing, from the gray scale values of the corresponding points of a frame for interpolation F(k+1)/2, generated by the second processing of generating the gray scale value of step S3, the gray scale values of pixels in the frame for interpolation F(k+1/2) at time $t = k+1/2$ are found by non-uniform interpolation (step S4).

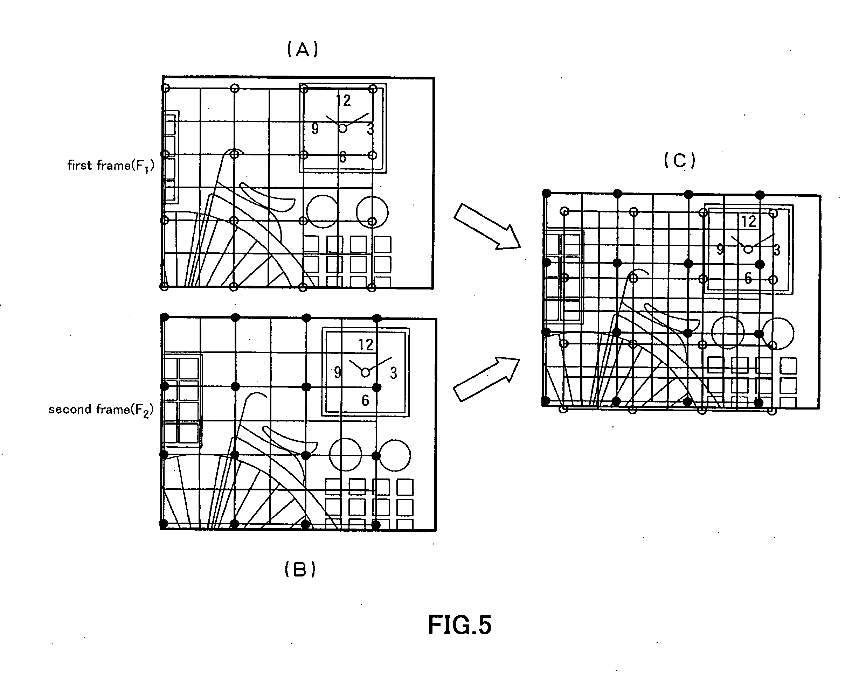

In a moving picture composed of a plurality of frames, the position in a frame of a partial picture performing the motion differs from one frame to another. Moreover, a pixel point on a given frame is not necessarily moved to a pixel point at a different position on another frame, but rather more probably the pixel point is located between pixels. Viz., if a native picture is arranged as the time-continuous information, the pixel information represented by such native picture would be at two different positions on two frames. In particular, if the new frame information is generated by interpolation between different frames, the picture information on the original frames would differ almost unexceptionally from the pixel information on the newly generated frame. Suppose that two frames shown at (A) and (B) in Fig.5 are superposed at certain corresponding points of each frame. In this case, the relationship among the pixel points of the respective frames, shown only roughly for illustration, is as shown in at (C) in Fig.5. That is, the two frames become offset a distance corresponding to the picture movement. If the gray scale values of lattice points of the first frame (non-marked pixel points) are to be found using these two frame pictures, the processing of non-uniform interpolation is necessary.

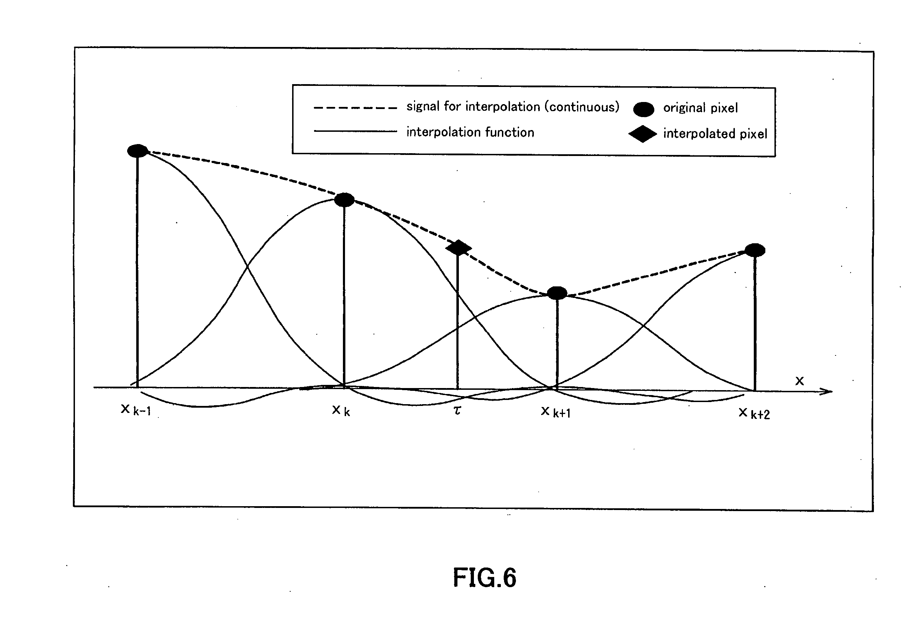

For example, the processing for picture interpolation of determining the value of the position of a pixel $u(\tau_x, \tau_y)$, newly generated on converting the picture resolution, is carried out by convolution of an original pixel $u(x_1, y_1)$ with an interpolation function h(x), as shown in Fig.6:

[Equation 1]

$$u\left(\tau_x, \tau_y\right) = \sum_{i=-\infty}^{\infty} \sum_{j=-\infty}^{\infty} u\left(x_i - y_j\right) h\left(\tau_x - x_i, \tau_y - y_j\right)$$

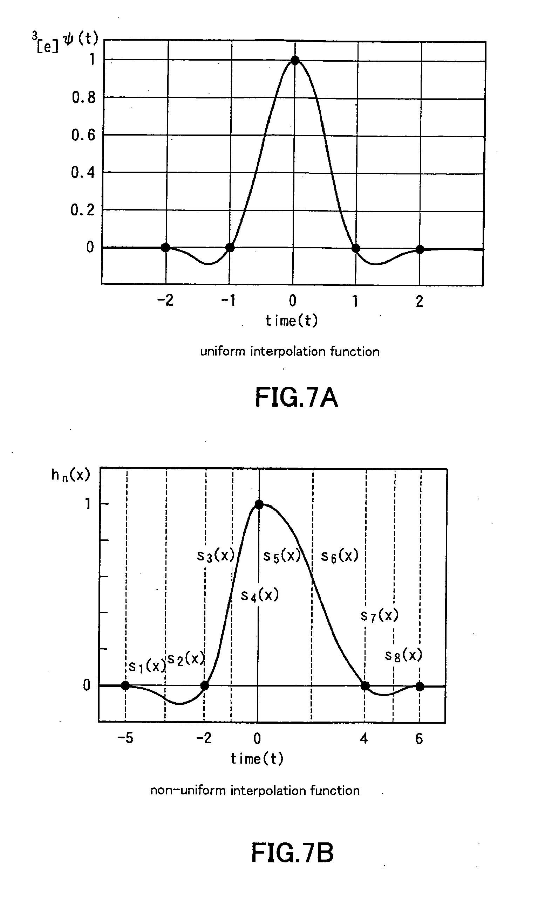

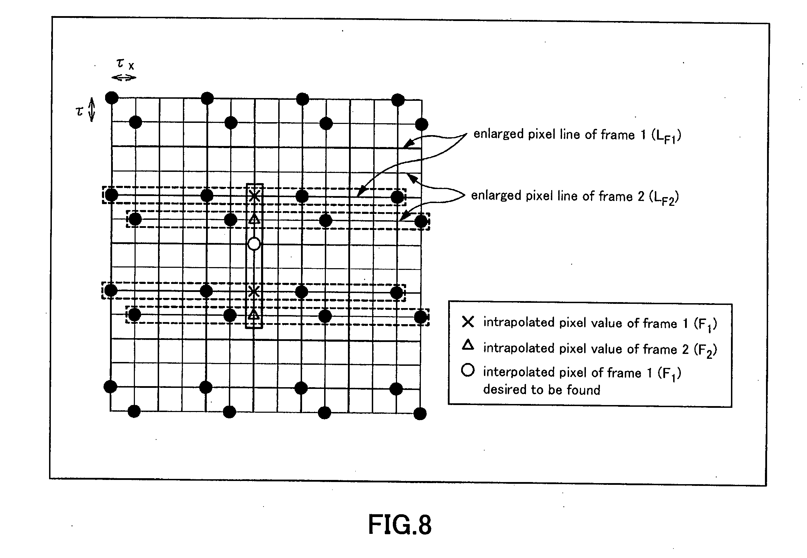

The same partial picture regions of a plurality of frame pictures are then made to correspond to one another. The interpolation information, as found from frame to frame by uniform interpolation from the pixel information of the horizontal (vertical) direction in the neighborhood of a desired corresponding point, using the uniform interpolation function shown in Fig.7(A), viz., the intrapolated pixel values x, $\Delta$ of the frames 1 (F1) and 2 (F2) (see Fig. 8), as the pixel information in the vertical (horizontal) direction, are processed with non-uniform interpolation, based on the value of frame offset, using the non-uniform interpolation function shown in Fig.7(B). By so doing, the pixel information at a desired position $\bigcirc$ in the frame 1 is determined.

In this manner, the corresponding picture points between frames are traced, and the time transition of the corresponding point is expressed by a function. A frame for interpolation is generated based on the number ratio of the original frame and the frames for conversion, whereby a clear picture signal performed a smooth movement may be obtained even though the number of frames is increased or decreased. A clear picture performing a smooth movement may thus be obtained at a frame rate suited to a display device used.

In conventional processing for enhancing the frame rate, a frame for interpolation F(k+1/2) is generated by uniform interpolation, and the motion information is obtained by motion estimation with 1/2 precision. This motion information is used for block matching to generate the gray scale value of the corresponding point by 1/2 precision. In this conventional processing for enhancing the frame rate, the picture of the frame for interpolation is deteriorated at a moving portion. With the frame rate conversion device 1, the corresponding point is estimated by the processing of corresponding point estimation, and the gray scale value of the corresponding point estimated is used to generate a gray scale value of the corresponding point of the frame for interpolation by uniform interpolation. The gray scale values of neighboring points of the corresponding points of the frame for interpolation are then generated by non-uniform interpolation. With this formulation of the frame rate conversion device 1, the frame rate may be enhanced without deterioration in the moving portion in the picture.

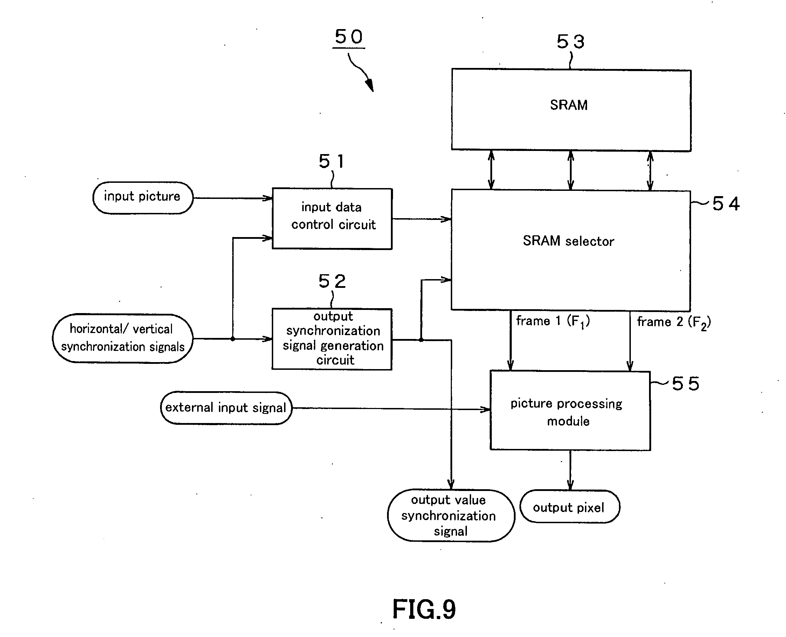

It should be noted that the frame rate conversion device 1 not only has the above described function of enhancing the frame rate, but also may have the function of performing the processing of enlarging interpolation with the use of two frame pictures. The function of the enlarging interpolation using two frame pictures may be implemented by an enlarging interpolation processor 50 including an input data control circuit 51, an output synchronization signal generation circuit 52, an SRAM 53, an SRAM selector 54 and a picture processing module 55, as shown for example in Fig.9.

In this enlarging interpolation processor 50, the input data control circuit 51 manages control of sequentially supplying an input picture, that is, the picture information of each pixel, supplied along with the horizontal and vertical synchronization signals, to the SRAM selector 54.

The output synchronization signal generation circuit 52 generates an output side synchronization signal, based on the horizontal and vertical synchronization signals supplied thereto, and outputs the so generated output side synchronization signal, while supplying the same signal to the SRAM selector 54.

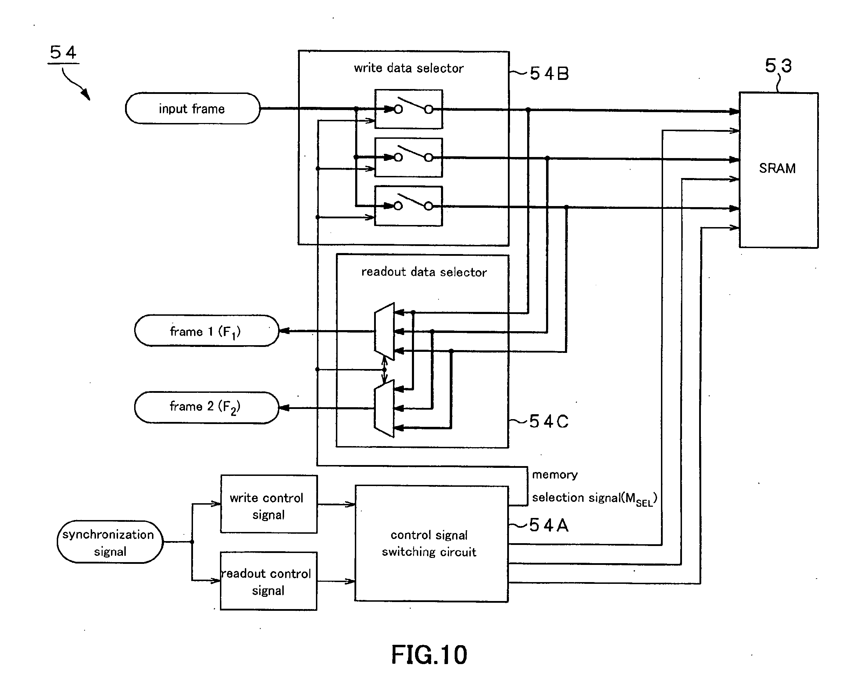

The SRAM selector 54 is constructed as shown for example in Fig.10, and includes a control signal switching circuit 54A, a write data selector 54B, a readout data selector 54C and a RAM 53. The write data selector 54B performs an operation in accordance with a memory selection signal delivered from the control signal switching circuit 54A based on a write control signal and a readout control signal generated with the synchronization signals supplied. An input picture from the input data control circuit 51 is entered, on the frame-by-frame basis, to the RAM 53, at the same time as two-frame pictures are read out in synchronization with the output side synchronization signal generated by the output synchronization signal generation circuit 52.

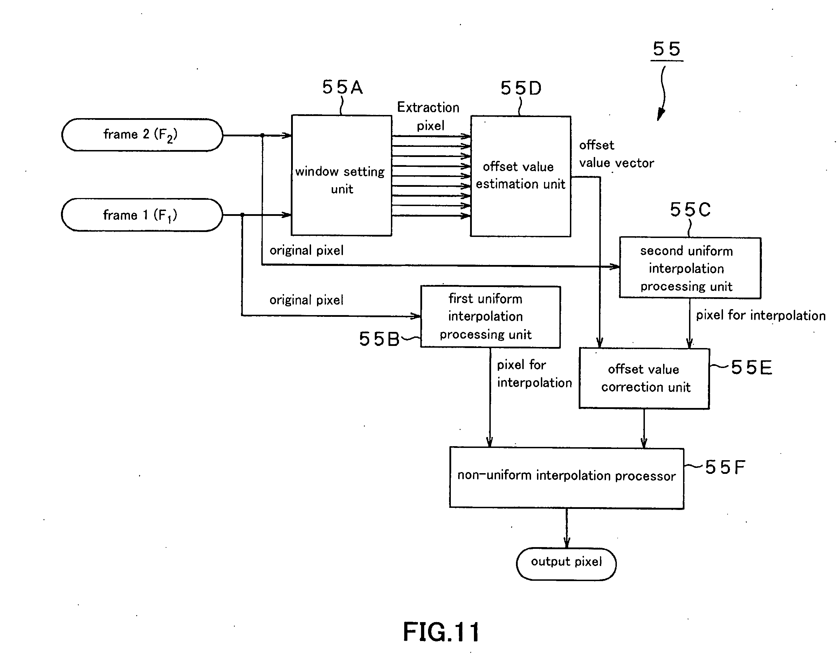

The picture processing module 55, performing the processing for picture interpolation, based on the frame-to-frame information, is constructed as shown in Fig. 11.

Viz., the picture processing module 55 includes a window setting unit 55A supplied with two frames of the picture information read out simultaneously from the SRAM 53 via SRAM selector 54. The picture processing module also includes a first uniform interpolation processing unit 55B and a second uniform interpolation processing unit 55C. The picture processing module also includes an offset value estimation unit 55D supplied with the pixel information extracted from the above mentioned two-frame picture information by the window setting unit 55A. The picture processing module also includes an offset value correction unit 55E supplied with an offset value vector estimated by the offset value estimation unit 55D and with the pixel information interpolated by the second uniform interpolation processing unit 55C. The picture processing module further includes a non-uniform interpolation processor 55F supplied with the pixel information corrected by the offset value correction unit 55E and with the pixel information interpolated by the first uniform interpolation processing unit 55B.

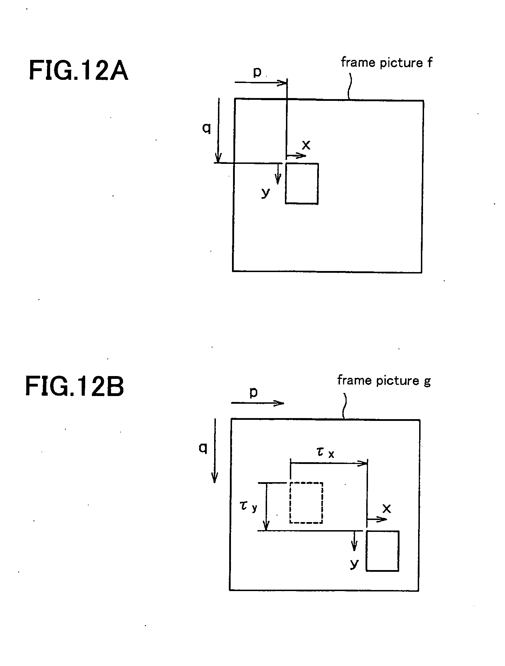

In the picture processing module 55, the window setting unit 55A sets a window at preset points (p, q) for two frame pictures f, g entered via the SRAM selector 54, as shown in Figs. 12A and 12B. The offset value estimation unit 55D shifts the window of the frame picture g by an offset value ($\tau$x, $\tau$y). The picture processing module then performs scalar product operation for the pixel values of the relative position (x, y) in the window. The resulting value is to be a cross-correlation value Rpq ($\tau$x, $\tau$y).

[Equation 2]

$$Rpq\left(\tau_x,\tau_y\right)=\Sigma_x\Sigma_y\left[f\left(p+x,q+y\right)g\left(p+x+\tau_x,q+y+\tau_y\right)\right]$$

The offset values ($\tau$x, $\tau$y) are varied to extract the offset value ($\tau$x, $\tau$y) which will maximize the cross-correlation value Rpq ($\tau$x, $\tau$y) around the point (p, q).

[Equation 3]

$$\text{offset value} \ (\tau\text{x}, \tau\text{y}) = \{Rpq(\tau\text{x}, \tau\text{y})\}_{\max}$$

Meanwhile, it is also possible to Fourier transform in-window pixel data of the two frame pictures f, g in order to find the cross-correlation Rpq ($\tau$x, $\tau$y).

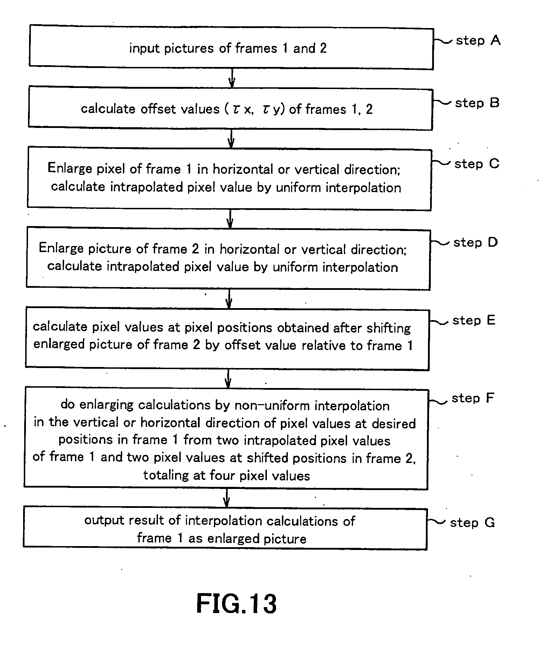

The present enlarging interpolation processor 50 executes the processing of enlarging interpolation in accordance with a sequence shown by the flowchart of Fig. 13.

That is, if, in the picture processing module 55, the two frame pictures f, g are read out via the SRAM selector 54 from the SRAM 53 (step A), the offset value estimation unit 55D calculates, by processing of correlation, an offset value ($\tau$x, $\tau$y) of the two frame pictures f, g (step B).

Pixel values of the picture f of the frame 1, intrapolated by uniform interpolation, are calculated by uniform interpolation by the first uniform interpolation processing unit 55B for enlarging the picture in the horizontal or vertical direction (step C).

Pixel values of the picture g of the frame 2, intrapolated by uniform interpolation, are calculated by the second uniform interpolation processing unit 55C for enlarging the picture in the horizontal or vertical direction (step D).

Then, pixel values at pixel positions of the enlarged picture of the frame 2, shifted by the picture offset value relative to the frame 1, are calculated by the offset value correction unit 55E (step E).

The non-uniform interpolation processor 55F then executes enlarging calculations, from two intrapolated pixel values of the frame 1 and two pixel values of the frame 2 at the shifted position, totaling at four pixel values, on the pixel values of the positions of the frame 1, desired to be found, in the vertical or horizontal direction, by non-uniform interpolation (step F). The results of the interpolation calculations for the frame 1 are then output as an enlarged picture (step G).

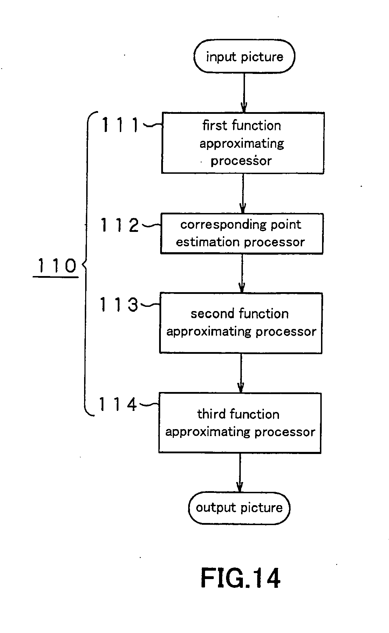

A frame rate conversion device 110, having the function of performing the processing of such enlarging interpolation, is constructed as shown for example in Fig.14.

The frame rate conversion device 110 is comprised of a computer made up of a first function approximating processor 111, a corresponding point estimation processor 112, a second function approximating processor 113 and a third function approximating processor 114.

The first function approximating processor 111 executes first function approximation processing of approximating the gray level distribution of the multiple pixels of the reference frame by a function.

The corresponding point estimation processor 112 performs correlation calculations, using the function of the gray level distribution in a plurality of reference frames at varying time points, as approximated by the first function approximating processor 111. The corresponding point estimation processor then sets respective positions that will yield the maximum value of correlation as the position of corresponding points in the multiple reference frames, by way of processing of corresponding point estimation.

The second function approximating processor 113 renders the corresponding point positions in each reference frame, estimated by the corresponding point estimation processor 112, into coordinate values corresponding to vertical and horizontal distances from the point of origin of the reference frame. Variations in the vertical and horizontal positions of the coordinate values in the multiple reference frames at varying time points are converted into time series signals, which time series signals are then approximated by a function, by way of the second approximation by a function,

The third function approximating processor 114 uses the function approximated by the second function approximating processor 113, for a frame for interposition at an optional time point between multiple reference frames, to find the gray scale value at corresponding points of the frame for interpolation by interpolation with the gray scale values at the corresponding points in the reference frame. The corresponding points are the corresponding points of the frame for interpolation relevant to the corresponding points on the reference frame. The above mentioned first function approximation is made to fit with the gray scale value of the corresponding point of the frame for interpolation to find the gray scale distribution in the neighborhood of the corresponding point. The gray scale value in the neighborhood of the corresponding point is converted into the gray scale value of the pixel point in the frame for interpolation by way of performing the third function approximation.

In the present frame rate conversion device 110, the first function approximating processor 111 performs function approximation of the gray scale distribution of a plurality of pixels in the reference frame. The corresponding point estimation processor 112 performs correlation calculations, using the function of the gray scale distribution in the multiple reference frames at varying time points as approximated by the first function approximating processor 111. The positions that yield the maximum value of correlation are set as point positions corresponding to pixels in the multiple reference frames. The second function approximating processor 113 renders the corresponding point positions in each reference frame, estimated by the corresponding point estimation processor 112, into coordinate points in terms of vertical and horizontal distances from the point of origin of the reference frame. Variations in the vertical and horizontal positions of the coordinate points in the multiple reference frames, taken at varying time points, are converted into a time series signal, which time series signal is then approximated by a function. For a frame for interpolation at an optional time point between the multiple reference frames, the third function approximating processor 114 uses the function approximated by the second function approximating processor 113 to find the gray scale values at corresponding point positions of the frame for interpolation by interpolation with the gray scale values at the corresponding points of the reference frame. The corresponding point position of the frame for interpolation is relevant to a corresponding point position in the reference frame. The above mentioned first function approximation is made to fit with the gray scale value of the corresponding point of the frame for interpolation to find the gray scale distribution in the neighborhood of the corresponding point. The gray scale value in the neighborhood of the corresponding point of the reference frame is converted into the gray scale value of the pixel point in the frame for interpolation by way of the processing for enhancing the frame rate as well as the processing for enlarging interpolation.

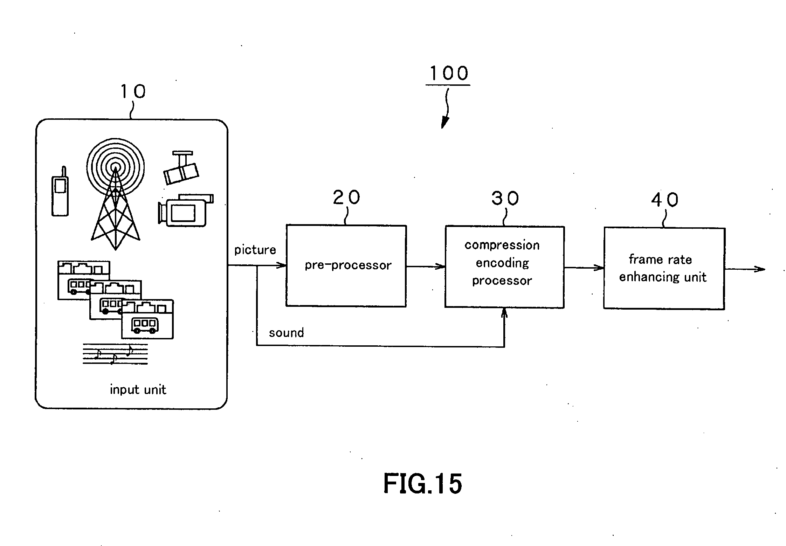

The present invention is applied to a picture signal conversion system 100, configured as shown for example in Fig. 15. The above mentioned frame rate conversion device 1 is provided in the picture signal conversion system 100 as a frame rate enhancing processor 40.

The picture signal conversion system 100 includes a pre-processor 20 that removes noise from the picture information entered from a picture input unit 10, such as an image pickup device, a compression encoding processor 30 and a frame rate enhancing unit 40. The compression encoding processor 30 inputs the picture information freed of noise by the pre-processor 20 and encodes the input picture information by way of compression. The frame rate enhancing unit 40 enhances the frame rate of the picture information encoded for compression by the compression encoding processor 30.

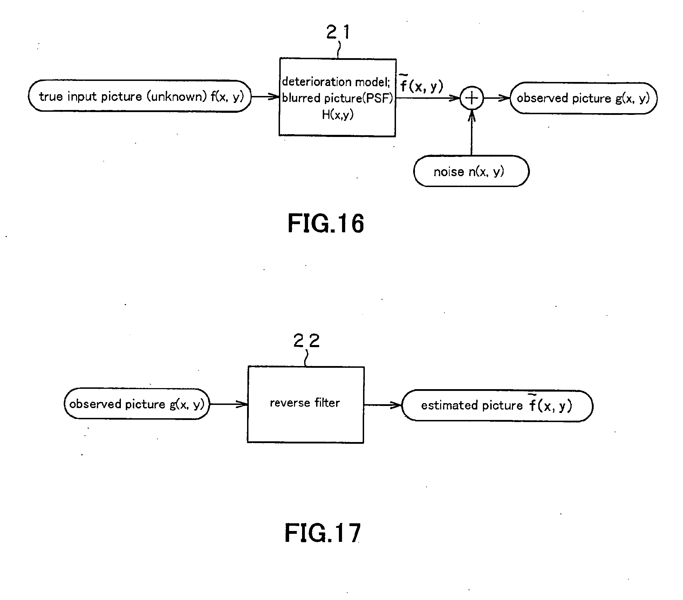

The pre-processor 20 in the present picture signal conversion system 100 removes the noise, such as blurring or hand-shake noise, contained in the input picture information, based on the technique of picture tensor calculations and on the technique of adaptive correction processing by a blurring function, by way of performing filtering processing. By a system model shown in Fig.16, an output of a deterioration model 21 of a blurring function H (x, y) that receives a true input picture f(x, y):

[Equation 4]

$$\hat{f}(x, y)$$

is added to with a noise n (x, y) to obtain an observed picture g(x, y). The input picture signal is entered to a restoration system model, shown in Fig. 17, to adaptively correct the model into coincidence with the observed picture g(x, y) to obtain a true input picture:

[Equation 5]

$$\hat{f}(x, y)$$

as estimated from the input picture signal. The pre-processor 20 is, in effect, a reverse filter 22.

The pre-processor 20 removes the noise based on the technique of picture tensor calculations and on the technique of adaptive correction processing of a blurring function, by way of performing the filtering, and evaluates the original picture using the characteristic of a Kronecker product.

The Kronecker product is defined as follows:

If A = [$a_{11}$] is a mn matrix and B = [$b_{11}$] is an st matrix, the Kronecker product

[Equation 6]

$$(A \otimes B)$$

is the following ms×nt matrix:

[Equation 7]

$$A \otimes B = \begin{bmatrix} a_{ij} B \end{bmatrix}$$

where

[Equation 8]

$$\otimes$$

denotes a Kronecker product operator.

The basic properties of the Kronecker product are as follows:

[Equation 9]

$$\left(A \otimes B\right)^{T} = A^{T} \otimes B^{T}$$
$$\left(A \otimes B\right)\!\left(C \otimes D\right) = \left(AC\right) \otimes \left(BD\right)$$
$$\left(A \otimes B\right)x = vec\!\left(BXA^{T}\right), vec(X) = x,$$
$$\left(A \otimes B\right)vec(X) = vec\!\left(BXA^{T}\right)$$

where
[Equation 10]

$$vec$$

is an operator that represents the operation of extending the matrix in the column direction to generate a column vector.
In the picture model in the pre-processor 20, it is supposed that there exists an unknown true input picture f(x, y). The observed picture g(x, y), obtained on adding the noise n(x, y) to an output of the deterioration model 21:
[Equation 11]

$$\hat{f}(x, y)$$

may be represented by the following equation (1):
[Equation 12]

$$g(x, y) = \bar{f}(x, y) + n(x, y)$$

(1)

where
[equation 13]

$$\hat{f}(x, y)$$

represents a deteriorated picture obtained with the present picture system, and n(x, y) is an added noise. The deteriorated picture:
[equation 14]

$$\hat{f}(x,y)$$

is represented by the following equation (2):
[equation 15]

$$\bar{f}(x,y) = \iint h(x,y;x',y')f(x',y')dx'\,dy'$$

where h(x, y; x', y') represents an impulse response of the deterioration system.

Since the picture used is of discrete values, a picture model of the input picture f(x, y) may be rewritten as indicated by the following equation (3):

[equation 16]

$$f(x,y) = \sum_{k,l} \hat{f}(k,l)\phi(x-k,y-l)$$
$$\tilde{f}(i,j) = \iint h(i,j;x',y')f(x',y')dx'\,dy'$$
$$= \iint h(i,j;x',y')\sum_{k,l}\hat{f}(k,l)\phi(x'-k,y'-l)dx'\,dy' \qquad (3)$$
$$= \sum_{k,l}\hat{f}(k,l)\iint h(i,j;x',y')\phi(x'-k,y'-l)dx'\,dy'$$
$$= \sum_{k,l}\hat{f}(k,l)H_k^{(x)}H_l^{(y)}$$

where $H_{k(x)}$, $H_{l(y)}$, expressed in a matrix form as indicated by the following equation (4), becomes a point image intensity distribution function of the deterioration model (PSF: Point Spread Function) H.

[equation 17]

$$H = \left[H_k^{(x)}H_l^{(y)}\right]$$

$$(4)$$

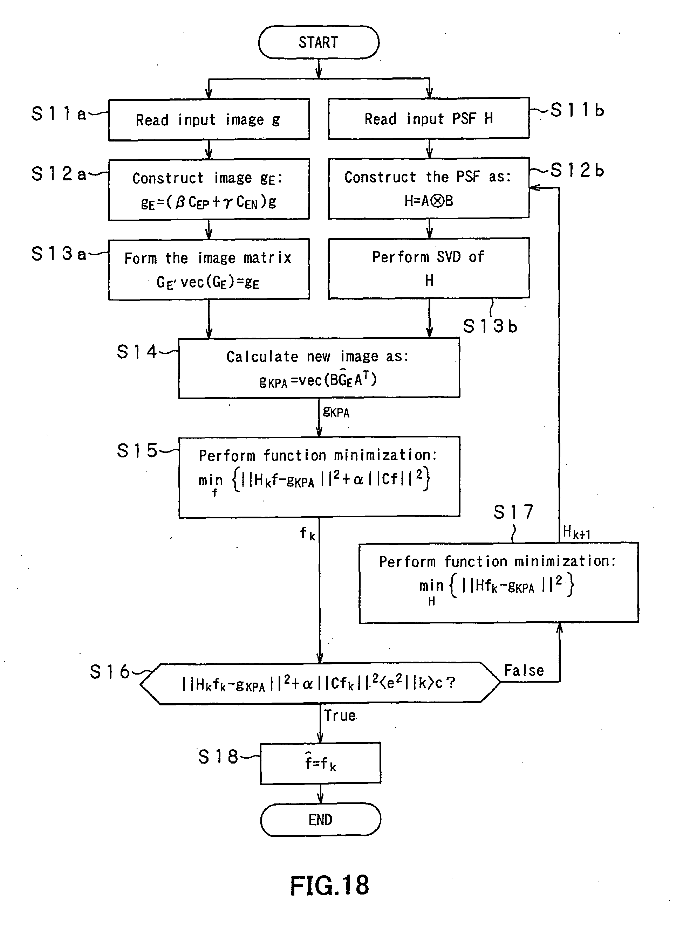

The above described characteristic of the reverse filter 22 is determined by the processing of learning as carried out in accordance with the sequence shown in the flowchart of Fig. 18.

Viz., in the processing of learning, the input picture g is initially read-in as the observed image g(x, y) (step S11a).

The picture $g_E$ is constructed (step S 12a) as

$$[\text{equation 18}]$$

$$g_E = \left(\beta C_{EP} + \gamma\, C_{EN}\right)g$$

to carry out, at step S12(a), the singular value decomposition (SVD) of

$$[\text{equation 19}]$$

$$G_E, vec(G_E) = g_E$$

in step S13(a).

The point spread function (PSF) H of the deterioration model is then read-in (step S11b).

A deterioration model represented by the Kronecker product:

$$[\text{equation 20}]$$

$$H = \left(A \otimes B\right)$$

is constructed (step S 12b) to carry out the singular value decomposition of the above mentioned deterioration model function H (step S 13b).

The system equation g may be rewritten to:

$$[\text{equation 21}]$$

$$g = \left(A \otimes B\right)f = vec\left(BEA^{T}\right), vec(F) = f$$

A new picture $g_{KPA}$ is calculated (step S14) as

$$[\text{equation 22}]$$

$$g_{KPA} = vec\left(B\hat{G}_E A^{T}\right)$$

The minimizing processing of

$$[\text{equation 23}]$$

$$\min_{f}\left\{\left\|H_k\, f - g_{KPA}\right\|^2 + \alpha\left\|Cf\right\|^2\right\}$$

is carried out on the new picture $g_{KPA}$ calculated (step S15). It is then checked whether or not $f_K$ as obtained meets the test condition:

[equation 24]

$$\left\| H_k f_k - g_{KPA} \right\|^2 + \alpha \left\| C f_k \right\|^2 < \varepsilon^2, k > c$$

where k is a number of times of repetition and g, c represent threshold values for decision (step S16).

If the result of decision in the step S16 is False, viz., $f_K$ obtained in the step S15 has failed to meet the above test condition, the minimizing processing:

[equation 25]

$$\min_H \left\{ \left\| H f_k - g_{KPA} \right\|^2 \right\}$$

is carried out on the above mentioned function H of the deterioration model (step S 17) to revert to the above step S13b. On the function $H_{k+1}$, obtained by the above step S 16, singular value decomposition (SVD) is carried out. The processing as from the step S13b to the step S17 is reiterated. When the result of decision in the step S16 is True, that is, when $f_K$ obtained in the above step 15 meets the above test condition, $f_K$ obtained in the above step S 15 is set to

[equation 26]

$$\hat{f} = f_k$$

(step S 18) to terminate the processing of learning for the input picture g.

The characteristic of the reverse filter 22 is determined by carrying out the above mentioned processing of learning on larger numbers of input pictures.

Viz., h(x, y)*F(x, y) is representatively expressed by Hf, and the system equation is set to

[equation 27]

$$g = f + n = Hf + n$$

and to

[equation 28]

$$H = A \otimes B$$

$$(A \otimes B) f = vec(BEA^T), vec(F) = f$$

to approximate f to derive the targeted new picture $g_E$ as follows:

[equation 29]

$$g_E = E[f]$$

where E stands for estimation. The new picture $g_E$ is constructed for saving or emphasizing edge details of an original picture.

The new picture $g_E$ is obtained as

[equation 30]

$$g_E = (\beta C_{EP} + \gamma C_{EN})g$$

where $C_{EP}$ and $C_{EN}$ denote operators for edge saving and edge emphasis, respectively.

A simple Laplacian kernel $C_{EP} = V_2F$ and a Gaussian kernel $C_{EN}$ having control parameters $\beta$ and $\gamma$, are selected to set

[equation 31]

$$g_{KPA} = vec(BG_E A^T), vec(G_E) = g_E$$

A problem of minimization is re-constructed as

[equation 32]

$$M(\alpha, f) = \|Hf - g_{KPA}\|^2 + \alpha \|Cf\|^2$$

is set and, from the following singular value decomposition (SVD):

[Equation 33]

$$G_{SVD} = U\Sigma V^T, A = U_A \Sigma_A V_A^T, B = U_B \Sigma_B V_B^T$$

the function H of the above deterioration model is estimated as

[Equation 34]

$$H = (U_A \otimes U_B)(\Sigma_A \otimes \Sigma_B)(V_A \otimes V_B)^T$$

which is used.

Bt removing the noise, such as blurring or hand-shake noise, contained in the input picture information, based on the technique of picture tensor calculations and on the technique of adaptive correction processing of a blurring function, by the filtering processing, as in the pre-processor 20 in the present picture signal conversion system 100, it is possible not only to remove the noise but to make the picture clear as well as to emphasize the edge.

In the present picture signal conversion system 100, the picture information processed for noise removal by the pre-processor 20 is encoded for compression by the compression encoding processor 30. In addition, the picture information, encoded for compression, has the frame rate enhanced by the frame rate enhancing unit 40.

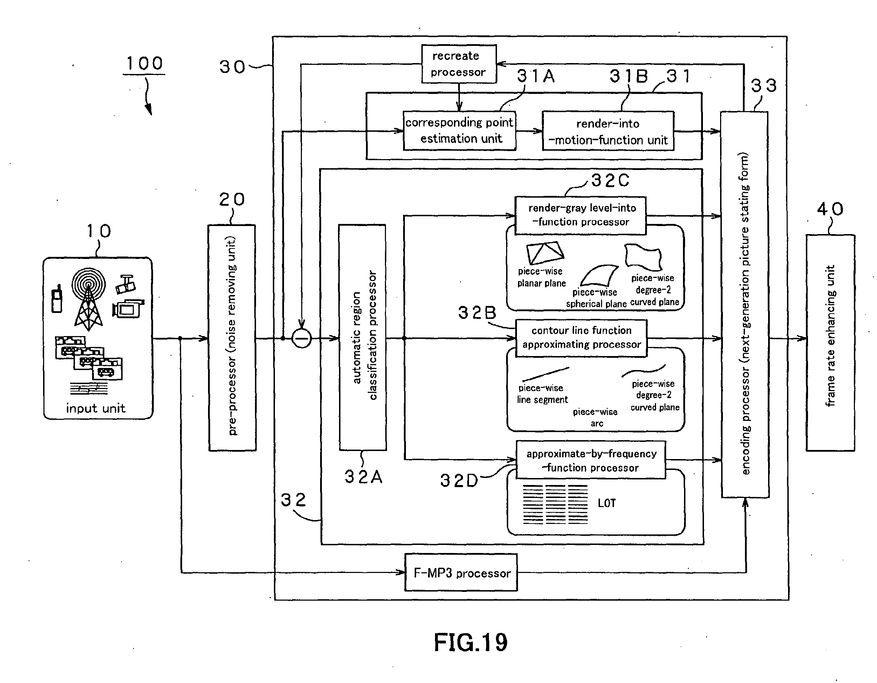

The compression encoding processor 30 in the present picture signal conversion system 100 performs the encoding for compression based on the theory of fluency. Referring to Fig. 19, the compression encoding processor includes a first render-into-function processor 31, a second render-into-function processor 32, and an encoding processor 33. The encoding processor 33 states the picture information, put into the form of a function by the first render-into-function processor 31 and the second render-into-function processor 32, in a predetermined form for encoding.

The first render-into-function processor 31 includes a corresponding point estimation unit 31A and a render-into- motion-function processor 31B. The corresponding point estimation unit 31A estimates corresponding points between a plurality of frame pictures for the picture information that has already been freed of noise by the pre-processor 20. The render-into- motion-function processor 31B renders the moving portion of the picture information into the form of a function using the picture information of the corresponding points of the respective frame pictures as estimated by the corresponding point estimation unit 31A.

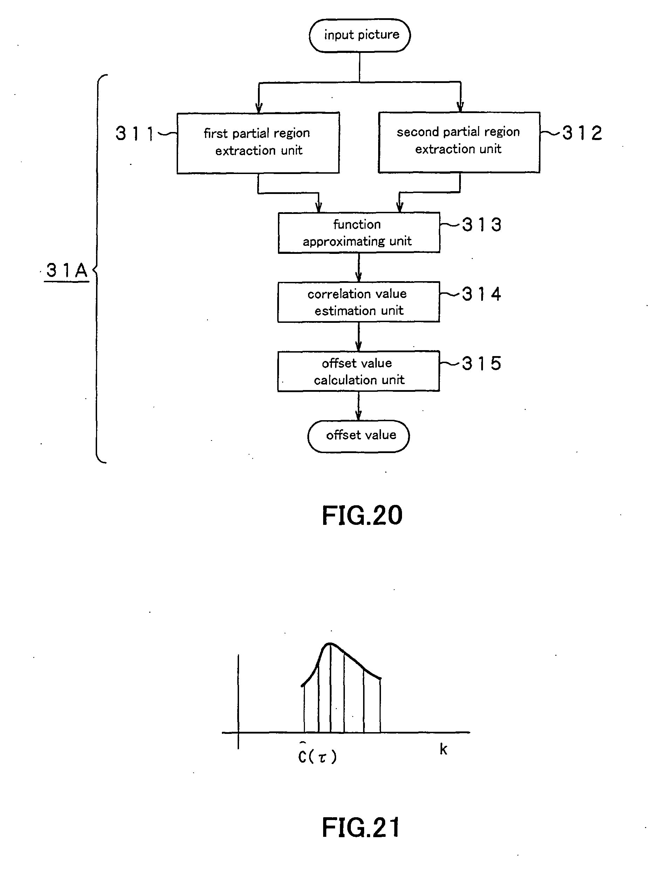

The corresponding point estimation unit 31A is designed and constructed as shown for example in Fig.20.

Viz., the corresponding point estimation unit 31A includes a first partial picture region extraction unit 311 that extracts a partial picture region of a frame picture. The corresponding point estimation unit 31A also includes a second partial picture region extraction unit 312 that extracts a partial picture region of another frame picture that is consecutive to the first stated frame picture. The partial picture region extracted is to be similar in shape to the partial picture region extracted by the first partial picture region extraction unit 311. The corresponding point estimation unit also includes a function approximation unit 313 that renders the partial picture regions, extracted by the first and second partial picture region extraction units 311, 312, so that the partial picture regions selected will have equivalent picture states, and expresses the gray scale value of each picture converted in the form of a function by a piece-wise polynomial in accordance with the fluency function to output the resulting functions. The corresponding point estimation unit also includes a correlation value calculation unit 314 that calculates the correlation value of the output of the function approximation unit 313. The corresponding point estimation unit further includes an offset value calculation unit 315 that calculates the picture position offset that will give a maximum value of correlation as calculated by the correlation value calculation unit 314 to output the result as an offset value of the corresponding point.

In this corresponding point estimation unit 31A, the first partial picture region extraction unit 311 extracts the partial picture region of a frame picture as a template. The second partial picture region extraction unit 312 extracts a partial picture region of another frame picture which is consecutive to the first stated frame picture. The partial picture region is to be similar in shape to the partial picture region extracted by the first partial picture region extraction unit 311. The function approximation unit 313 selects the partial picture regions, extracted by the first and second partial picture region extraction units 311, 312, so that the partial picture regions selected will have equivalent picture states, and expresses the gray scale value of each picture converted in the form of a function by a piece-wise polynomial.

The corresponding point estimation unit 31A captures the gray scale values of the picture as continuously changing states and estimates the corresponding points of the picture in accordance with the theory of the fluency information. The corresponding point estimation unit 31 A includes the first partial picture region extraction unit 311, second partial picture region extraction unit 312, function approximating unit 313, correlation value estimation unit 314 and the offset value calculation unit 315.

In the corresponding point estimation unit 31A, the first partial picture region extraction unit 311 extracts a partial picture region of a frame picture.

The second partial picture region extraction unit 312 extracts a partial picture region of another frame picture which is consecutive to the first stated frame picture. This partial picture region is to be similar in shape to the partial picture region extracted by the first partial picture region extraction unit 311.

The function approximating unit 313 selects the partial picture regions, extracted by the first and second partial picture region extraction units 311, 312, so that the partial picture regions selected will have equivalent picture states, and expresses the gray scale value of each converted picture in the form of a function by a piece-wise polynomial in accordance with the fluency theory.

The correlation value estimation unit 314 integrates the correlation values of outputs of the function approximating unit 313.

The offset value calculation unit 315 calculates a position offset of a picture that gives the maximum value of correlation as calculated by the correlation value estimation unit 314. The offset value calculation unit outputs the result of the calculations as an offset value of the corresponding point.

In this corresponding point estimation unit 31, the first partial picture region extraction unit 311 extracts the partial picture region of a frame picture as a template. The second partial picture region extraction unit 312 extracts a partial picture region of another frame picture that is consecutive to the first stated frame picture. The partial picture region extracted is to be similar in shape to the partial picture region extracted by the first partial picture region extraction unit 311. The function approximation unit 313 selects the partial picture regions, extracted by the first and second partial picture region extraction units 311, 312, so that the partial picture regions selected will have equivalent picture estates, and expresses the gray scale value of each converted picture in the form of a function by a piece-wise polynomial.

It is now assumed that a picture f1 (x, y) and a picture f2 (x, y) belong to a space $S_{(m)}(R_2)$, and that øm(t) is expressed by a (m-2) degree piece-wise polynomial of the following equation (5):

[equation 35]

$$\hat{\phi}_m(\omega) := \int_{t \in R} e^{-i\omega t} \phi_m(t) dt = \left( \frac{1 - e^{-i\omega}}{i\omega} \right)^m \tag{5}$$

whilst the space $S_{(m)}(R_2)$ is expressed as shown by the following equation (6):

[equation 36]

$$S^{(m)}(R^2) = span \left\{ \phi_m(\cdot - k) \phi_m(\cdot - l) \right\}_{k,l \in Z} \tag{6}$$

the frame-to-frame correlation function c($\tau$1, $\tau$2) may be expressed by the following equation (7):

[equation 37]

$$c(\tau_1, \tau_2) = \iint f_1(x, y) f_2(x + \tau_1, y + \tau_2) dx dy \tag{7}$$

From the above supposition, viz.,

[equation 38]

$$f_1(x, y), f_2(x, y) \in S^{(m)}(R^2)$$

the equation (7), expressing the frame-to-frame correlation function may be shown by the following equation (8):

[Equation 39]

$$c(\tau_1, \tau_2) \in S^{(2m)}(R^2) \qquad (8)$$

Viz., the frame-to-frame correlation function c(τ1. τ2) belongs to the space $S_{(2m)}(R_2)$ in which to perform 2m-degree interpolation shown in Fig.21, while the sampling frequency $\psi_{2m}$(τ1. τ2) of the space $S_{(2m)}(R_2)$ in which to perform 2m-degree interpolation uniquely exists, and the above mentioned frame-to-frame correlation function c(τ1. τ2) may be expressed by the following equation (9):
[Equation 40]

$$c(\tau_1, \tau_2) = \sum_k \sum_l c(k,l)\psi_{2m}(\tau_1 - l, \tau_2 - k) \qquad (9)$$

From the equation (8), it is possible to construct the (2m-1) degree piece-wise polynomial for correlation plane interpolation.
Viz., by a block-based motion vector evaluation approach, initial estimation of the motion vectors of separate blocks of the equation (7) may properly be obtained. From this initial estimation, the equation (8) that will give a real motion of optional precision is applied.
The general form of a separable correlation plane interpolation function is represented by the following equation (10):
[Equation 41]

$$\psi_{2m}(x,y) = \sum_{k=-\infty}^{\infty} \sum_{l=-\infty}^{\infty} c_k d_l M_{2m}(x-k) \times M_{2m}(y-l) \qquad (10)$$

where Ck and dl are correlation coefficients and $M_{2m}(x) = ø_{2m}(x+2) \cdot ø_m(x)$ is (m-1) degree B-spline.
By proper truncation limitation in the equation (10), the above mentioned correlation function c(τ1. τ2) may be approximated by the following equation (11):
[Equation 42]

$$\hat{c}(\tau_1, \tau_2) = \sum_{k=K_1}^{K_2} \sum_{l=L_1}^{L_2} c(k,l)\psi_{2m}(\tau_2 - k) \times \psi_{2m}(\tau_2 - l) \qquad (11)$$

where K1 = $[\tau_1]$ - s + 1, K$_2$ = $[\tau_2]$ + s, L$_1$ = $[\tau_2]$ - s + 1 and L$_2$ = $[\tau_2]$ + s, and s determines ø$_m$(x).

A desired interpolation equation is obtained by substituting the following equation (12):

[Equation 43]

$$\psi_4(x,y) = \sum_{k=-\infty}^{\infty} \sum_{l=-\infty}^{\infty} \sqrt{3}\left(\sqrt{3}-2\right)^{|k|+|l|} M_4(x-k) \times M_4(y-l) \tag{12}$$

into the equation (11) in case m = 2, for example.

The motion vector may be derived by using the following equation (13):

[Equation 44]

$$\hat{v} = \underset{\tau_1,\tau_2}{\arg\max}\left[\hat{c}(\tau_1,\tau_2)\right] \tag{13}$$

The above correlation function c($\tau$1. $\tau$2) may be recreated using only the information of integer points. The correlation value estimation unit 314 calculates a correlation value of an output of the function approximating unit 313 by the above correlation function c($\tau$1. $\tau$2).

The offset value calculation unit 315 calculates the motion vector V by the equation (13) that represents the position offset of a picture which will give the maximum value of correlation as calculated by the correlation value estimation unit 314. The offset value calculation unit outputs the resulting motion vector V as an offset value of the corresponding point.

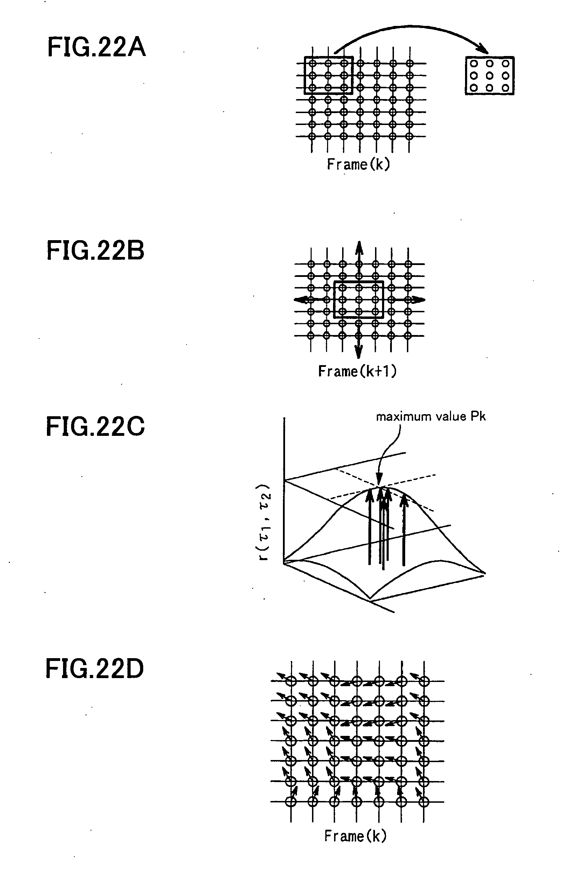

The manner of how the corresponding point estimation unit 31A determines the motion vector by corresponding point estimation is schematically shown in Figs.22A to 22D. Viz., the corresponding point estimation unit 31A takes out a partial picture region of a frame picture (k), and extracts a partial picture region of another frame picture different from the frame picture (k), as shown in Fig.22A. The partial picture region is to be similar in shape to that of the frame picture (k). The corresponding point estimation unit 31 A calculates the frame-to-frame correlation, using the correlation coefficient c($\tau$1. $\tau$2) represented by:

[Equation 45]

$$c(i,j) = \sum_l \sum_m f_k(l,m) f_{k+1}(l+i,m+j)$$

as shown in Fig.22B to detect the motion at a peak point of a curved surface of the correlation, as shown in Fig.22C, to find the motion vector by the above equation (13) to determine the pixel movement in the frame picture (k), as shown in Fig.22D.

In comparison with the motion vector of each block of the frame picture (k) by conventional block matching, the same motion vector of each block of the frame picture (k), determined as described above, shows smooth transition between neighboring blocks.

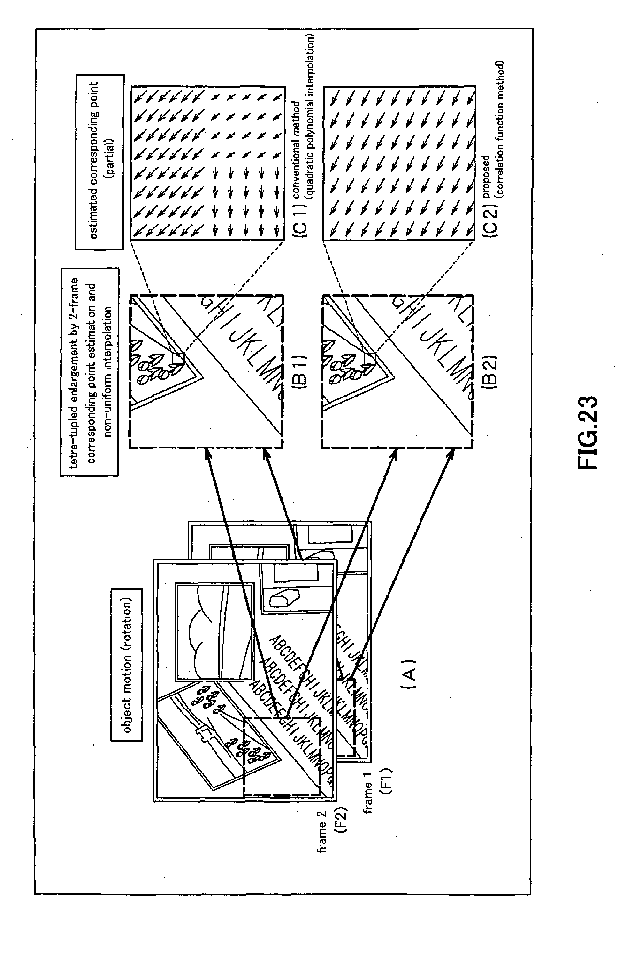

Viz., referring to Fig.23(A), frames 1 and 2, exhibiting a movement of object rotation, were enlarged by a factor of four by 2-frame corresponding point estimation and non-uniform interpolation. The motion vectors, estimated at the corresponding points by the conventional block matching, showed partially non-uniform variations, as shown in Figs.23 (B1), (C1). Conversely, the motion vectors, estimated at the corresponding points by the above described corresponding point estimation unit 31A, exhibit globally smooth variations, as shown in Figs.23(B2) and (C2). In addition, the volume of computations at 1/N precision, which is $N^2$ with the conventional technique, is N with the present technique,

The render-into-motion-function unit/ 31B uses the motion vector V, obtained by corresponding point estimation by the corresponding point estimation unit 31 A, to render the picture information of the moving portion into the form of a function.

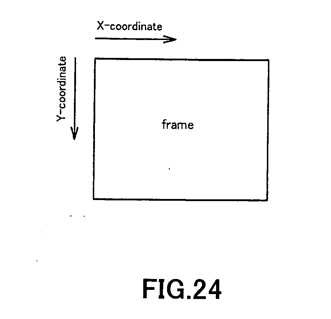

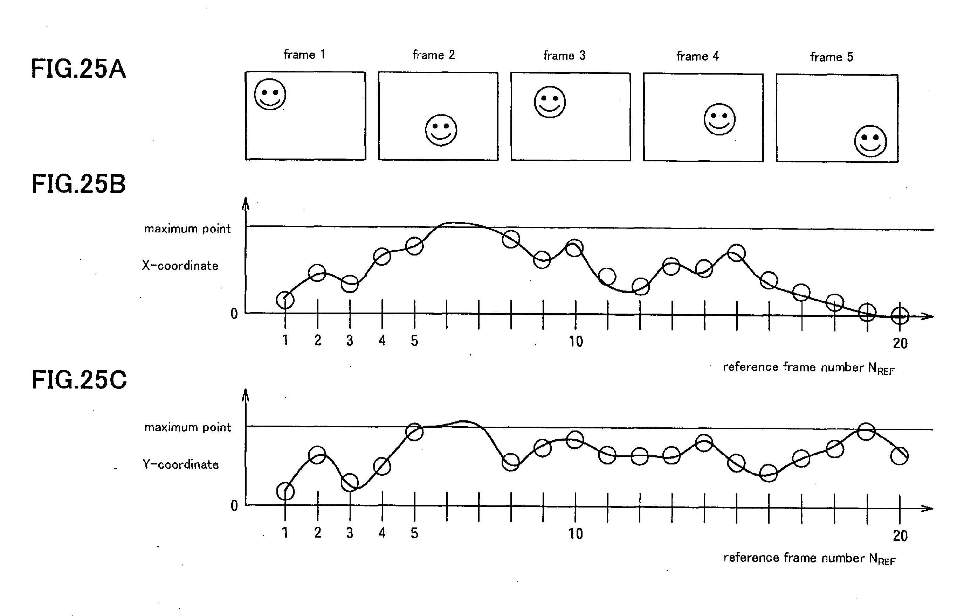

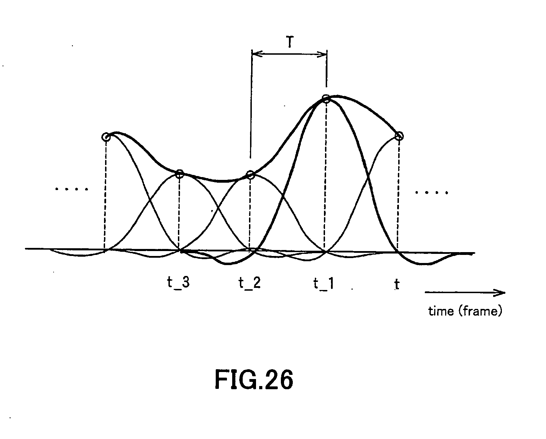

Viz., if once the corresponding point of the partial moving picture is estimated for each reference frame, the amount of movement, that is, the offset value, of the corresponding point, corresponds to the change in the coordinate positions x, y of the frame. Thus, if the point of origin of the frame is set at an upper left corner, as shown in Fig.24, the render-into-motion-function unit 31B expresses the movement of the picture of each frame, shown for example in Fig. 25A, as the movements of the X- and Y-coordinates of the frame, as shown in Figs.25B and 25C. Thus, the render-into-motion-function unit 31B renders changes in the movements of the X- and Y-coordinates by a function by way of approximating the changes in movement into a function. The render-into-motion-function unit 31B estimates the inter-frame position T by interpolation with the function, as shown in Fig.26, by way of motion compensation.

On the other hand, the second render-into-function processor 32 encodes the input picture by the render-into-fluency-function processing, in which the information on the contour, gray level and on the frame-to-frame information is approximated based on the theory of the fluency information. The second render-into-function processor 32 is composed of an automatic region classification processor 32A, a contour line function approximating processor 32B, a render-gray level-into-function processor 32C and an approximate-by-frequency-function processor 32D.

Based on the theory of the fluency information, the automatic region classification processor 32A classifies the input picture into a piece-wise planar surface region ($m \leq 2$), a piece-wise curved surface region ($m = 3$), a piece-wise spherical surface region ($m = \infty$) and an irregular region (region of higher degree, e.g., $m \geq 4$).

In the theory of the fluency information, a signal is classified by a concept of 'signal space' based on classes specified by the number of degrees m.

The signal space $_mS$ is expressed by a piece-wise polynominal of the (m-1) degree having a variable that allows for (m-2) times of successive differentiation operations.

It has been proved that the signal space $_mS$ becomes equal to the space of the step function for m = 1, while becoming equal to the space of the Fourier power function for $m = \infty$. A fluency model is such a model that, by defining the fluency sampling function, clarifies the relationship between the signal belonging to the signal space $_mS$ and the discrete time-domain signal.

The contour line function approximating processor 32B is composed of an automatic contour classification processor 321 and an approximate-by-function processor 322. The contour line function approximating processor 32B extracts line segments, arcs and quadratic curves, contained in the piece-wise planar region ($m \leq 2$), piece-wise curved surface region ($m = 3$) and the piece-wise spherical surface region ($m = \infty$), classified by the automatic region classification processor 32A, for approximation by a function by the approximate-by-function processor 322.

The render-gray level-into-function processor 32C performs the processing of render-gray level-into-function processing on the piece-wise planar region ($m \leq 2$), piece-wise curved surface region ($m = 3$) and the piece-wise spherical surface region ($m = \infty$), classified by the automatic region classification processor 32A, with the aid of the fluency function.

The approximate-by-frequency-function processor 32D performs the processing of approximation by frequency function, by LOT (logical orthogonal transform) or DCT, for irregular regions classified by the automatic region classification processor 32A, viz., for those regions that may not be represented by polynomials.

This second render-gray level-into-function processor 32 is able to express the gray level or the contour of a picture, using the multi-variable fluency function, from one picture frame to another.

The encoding processor 33 states the picture information, put into the form of the function by the first render-into-function processor 31 and the second render-into-function processor 32, in a predetermined form by way of encoding.

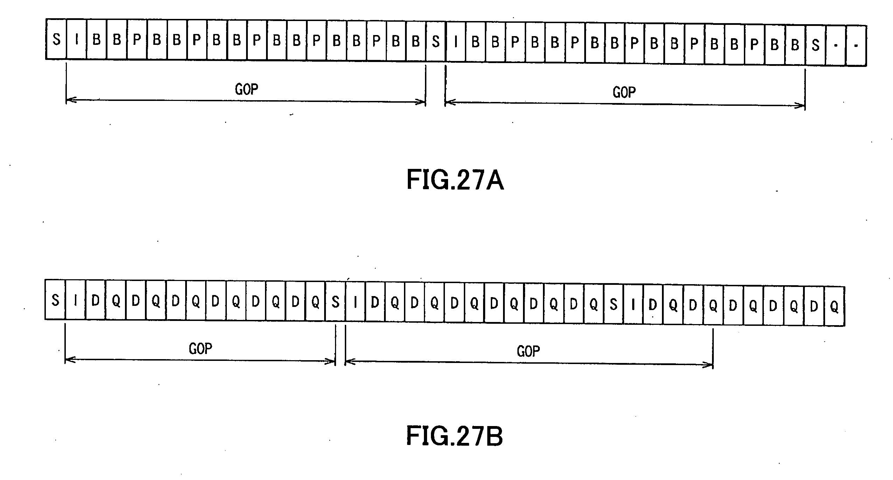

In MPEG encoding, an I-picture, a B-picture and a P-picture are defined. The I-picture is represented by frame picture data that has recorded a picture image in its entirety. The B-picture is represented by differential picture data as predicted from the forward and backward pictures. The P-picture is represented by differential picture data as predicted from directly previous I- and P-pictures. In the MPEG encoding, a picture data stream shown in Fig.27A is generated by way of an encoding operation. The picture data stream is a string of encoded data of a number of pictures arranged in terms of groups of frames or pictures (GOPs) provided along the tine axis, as units. Also, the picture data stream is a string of encoded data of luminance and chroma signals having DCTed quantized values. The encoding processor 33 of the picture signal conversion system 100 performs the encoding processing that generates a picture data stream configured as shown for example in Fig.27B.

Viz., in the encoding processor 33 defines an I-picture, a D-picture and a Q-picture. The I-picture is represented by frame picture function data that has recorded a picture image in its entirety. The D-picture is represented by frame interpolation differential picture function data of forward and backward I- and Q-pictures or Q- and Q-pictures. The Q-picture is represented by differential frame picture function data from directly previous I- or P-pictures. The encoding processor 33 generates a picture data stream configured as shown for example in Fig.27B. The picture data stream is composed of a number of encoded data strings of respective pictures represented by picture function data, in which the encoded data strings are arrayed in terms of groups of pictures (GOPs) composed of a plurality of frames grouped together along the time axis.

It should be noted that a sequence header S is appended to the picture data stream shown in Figs.27A and 27B.

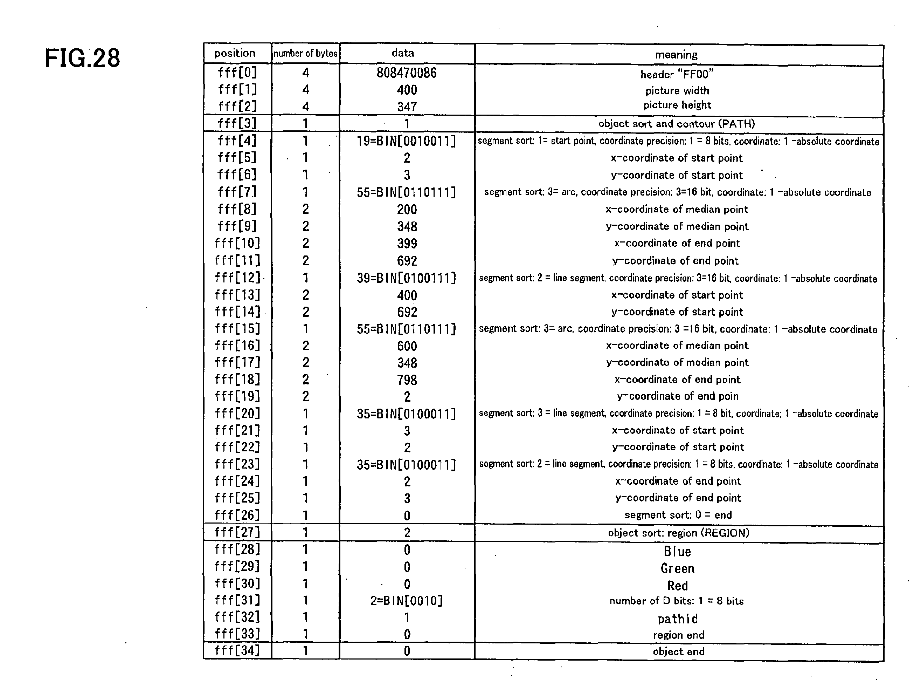

An example bit format of the I- and Q-pictures in the picture data stream generated by the encoding processor 33 is shown in Fig.28. Viz., the picture function data indicating the I- and Q-pictures includes the header information, picture width information, picture height information, the information indicating that the object sort is the contour, the information indicating the segment sort in the contour object, the coordinate information for the beginning point, median point and the terminal point, the information indicating that the object sort is the region, and the color information of the region object.

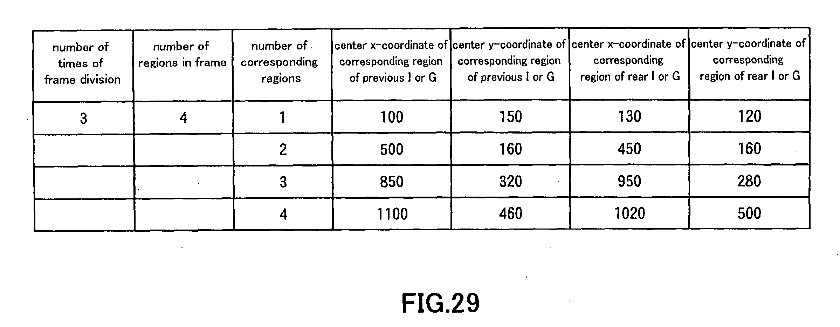

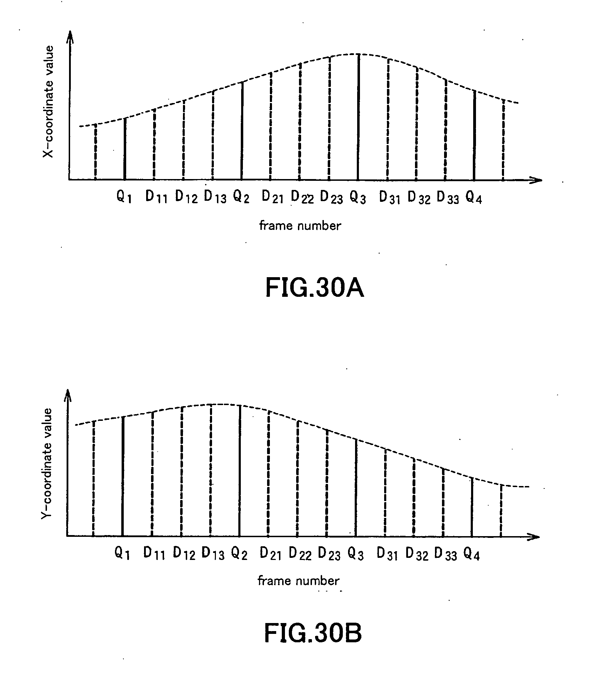

Fig.29 shows an example bit format of a D-picture in a picture data stream generated by the encoding processor 33. The picture function data, representing the D-picture, there is contained the information on, for example, the number of frame division, the number of regions in a frame, the corresponding region numbers, center X- and Y-coordinates of corresponding regions of a previous I-picture or a previous P-picture, and on the center X- and Y-coordinates of corresponding regions of the backward I-picture or the backward P-picture. Figs.30A and 30B show transitions of the X- and Y-coordinates of the corresponding points of the region number 1 in the example bit format of the D-picture shown in Fig.15.

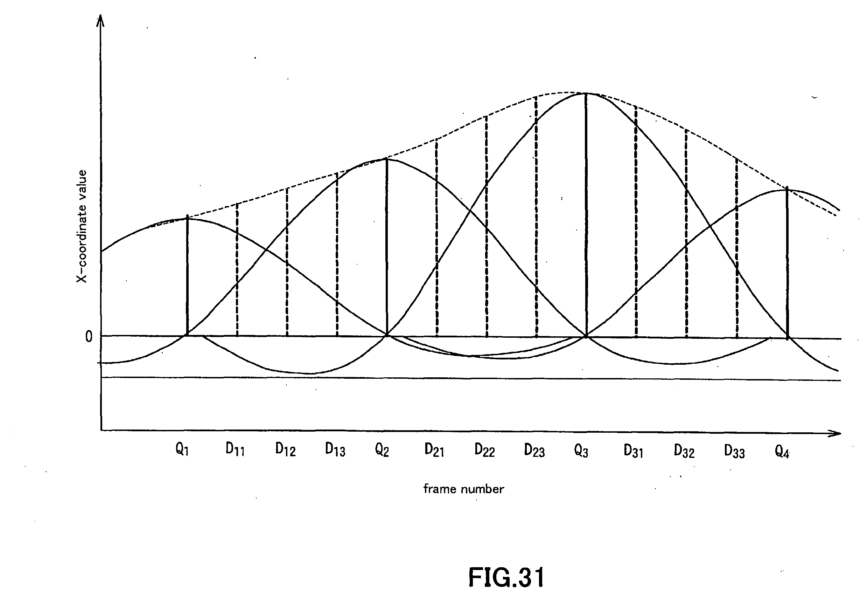

Referring to Fig.31, the X-coordinate values of the D-pictures in the corresponding region (D21, D22 and D23) may be calculated by interpolation calculations from the X-coordinate values of previous and succeeding pictures (Q1, Q2, Q3 and Q4). The Y-coordinate values of the D-pictures in the corresponding region (D21, D22 and D23) may be calculated by interpolation calculations from the Y-coordinate values of previous and succeeding pictures (Q1, Q2, Q3 and Q4)

In the picture signal conversion system 100, the pre-processor 20 removes the noise from the picture information, supplied from the picture input unit 10, such as a picture pickup device. The compression encoding processor 30 encodes the picture information, freed of the noise by the pre-processor 20, by way of signal compression. The frame rate enhancing unit 40, making use of the frame rate conversion device 1, traces the frame-to-frame corresponding points, and expresses the time transitions by a function to generate a frame for interpolation, expressed by a function, based on a number ratio of the original frame(s) and the frames to be generated on conversion.

Viz., the present picture signal conversion system 100 expresses e.g., the contour, using a larger number of fluency functions, from one picture frame to another, while expressing the string of discrete frames along the time axis by a time-continuous function which is based on the piece-wise polynomial in the time domain. By so doing, the high-quality pictures may be reproduced at an optional frame rate.

In the theory of the fluency information, the signal space of a class specified by the number of degrees m is classified based on the relationship that a signal may be differentiated continuously.

For any number m such that m > 0, the subspace spanned is represented by a (m - 1) degree piece-wise polynomial that may be continuously differentiated only once.

The sampling function ψ(x) of the class (m = 3) may be expressed by linear combination of the degree-2 piece-wise polynomial that may be continuously differentiated only once, by the following equation (14):

[Equation 46]

$$\psi(x) = -\frac{\tau}{2}\phi\left(x+\frac{\tau}{2}\right) + 2\tau\phi(x) - \frac{\tau}{2}\phi\left(x-\frac{\tau}{2}\right)$$

(14)

where ø(x) may be represented by the following equation (15):

[Equation 47]

$$\phi(x) = \int_{-\infty}^{\infty} \left( \frac{\sin \pi f\tau}{\pi f\tau} \right)^3 e^{j2\pi fx} df \qquad (15)$$

Since ψ(x) is a sampling function, the function of a division may be found by convolution with the sample string.

If τ = 1, the equation (14) may be expressed by a piece-wise polynomial given by the following equation (16):

[Equation 48]

$$h_f(x) = \begin{cases} -\dfrac{7}{4}x^2 + 1 & |x| \in \left[ -\dfrac{1}{2}, \dfrac{1}{2} \right] \\[2mm] \dfrac{5}{4}x^2 - 3|x| + \dfrac{7}{4} & |x| \in \left[ \dfrac{1}{2}, 1 \right] \\[2mm] \dfrac{3}{4}x^2 - 2|x| + \dfrac{5}{4} & |x| \in \left[ 1, \dfrac{3}{2} \right] \\[2mm] -\dfrac{1}{4}x^2 + |x| - 1 & |x| \in \left[ \dfrac{3}{2}, 2 \right] \\[2mm] 0 & otherwise \end{cases} \qquad (16)$$

For example, the non-uniform fluency function of the class (m = 3):

[Equation 49]

$$h_f(x)$$

is a function shown in Fig.27.

A non-uniform interpolation fluency function

[Equation 50]

$$h_n(x)$$

is composed of eight piece-wise polynomials of the degree 2. A non-uniform interpolation fluency function of the (m = 3) class is determined by the non-uniform interval specified by $s_t(x) \sim s_6(x)$, and its constituent elements may be given by the following equation (17):

[Equation 51]

$$\begin{cases} s_1(t) = -B_1(t-t_{-2})^2 \\ s_2(t) = B_1(3t-t_{-1}-2t_{-2})(t-t_{-1}) \\ s_3(t) = -B_2(3t-2t_0-t_{-1})(t-t_{-1}) + \dfrac{2(t-t_{-1})^2}{(t_0-t_{-1})^2} \\ s_4(t) = B_2(t-t_0)^2 - \dfrac{2(t-t_0)^2}{(t_0-t_{-1})^2} \\ s_5(t) = B_3(t-t_0)^2 - \dfrac{2(t-t_0)^2}{(t_0-t_1)^2} \\ s_6(t) = -B_3(3t-2t_0-t_1)(t-t_1) + \dfrac{2(t-t_1)^2}{(t_0-t_1)^2} \\ s_7(t) = B_4(3t-t_1-2t_2)(t-t_1) \\ s_8(t) = -B_4(t-t_2)^2 \end{cases} \qquad (17)$$

where

[Equation 52]

$$\begin{cases} B_1 = \dfrac{t_0-t_{-2}}{4(t_0-t_{-1})^2(t_{-1}-t_{-2}) + 4(t_{-1}-t_{-2})^3} \\ B_2 = \dfrac{t_0-t_{-2}}{4(t_0-t_{-1})(t_{-1}-t_{-2})^2 + 4(t_0-t_{-1})^3} \\ B_3 = \dfrac{t_2-t_0}{4(t_2-t_1)^2(t_1-t_0) + 4(t_1-t_0)^3} \\ B_4 = \dfrac{t_2-t_0}{4(t_2-t_1)(t_1-t_0)^2 + 4(t_2-t_1)^3} \end{cases}$$

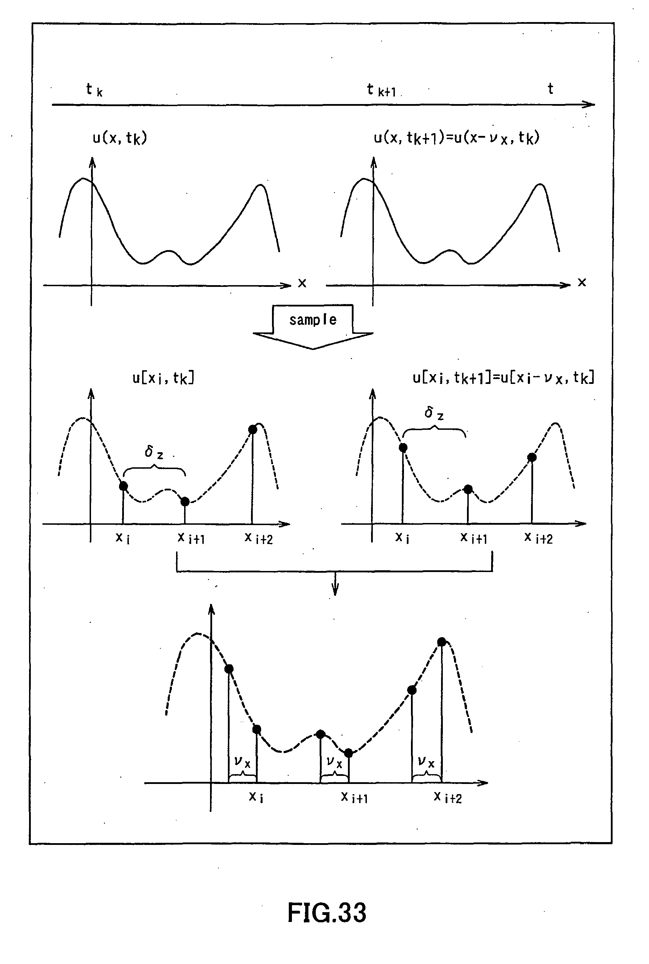

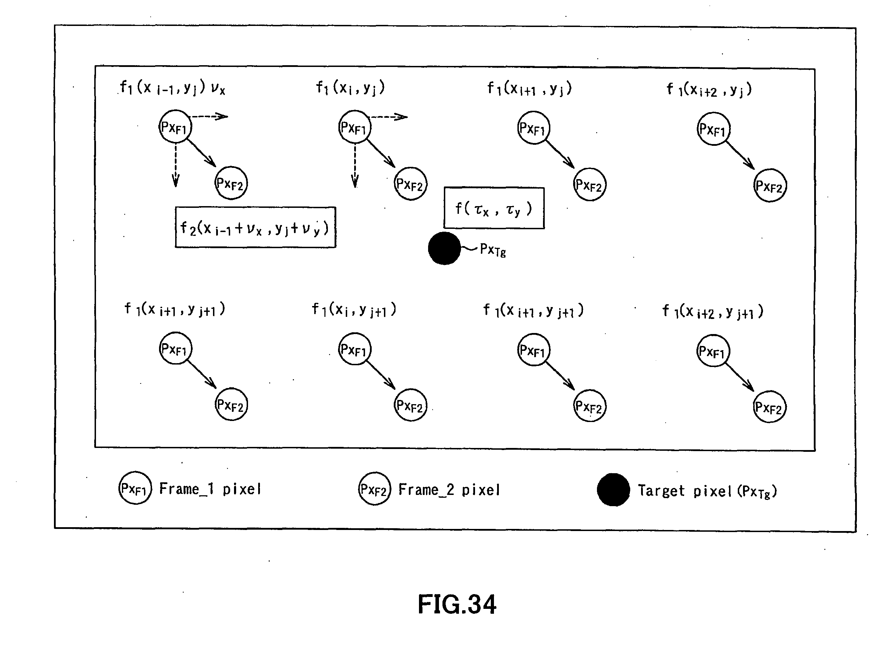

A real example of high resolution interpolation is shown in Fig.33. A concrete example of the pixel structure for interpolation is shown in Fig.34.

In Fig.34, a pixel $Px_{F1}$ of Frame_1 has a different motion vector that varies pixel $Px_{F2}$ in Frame_2:

[Equation 53]

$$\hat{v} = (\hat{v}_x, \hat{v}_y)$$

A pixel $Px_{TS}$ is a target pixel of interpolation.

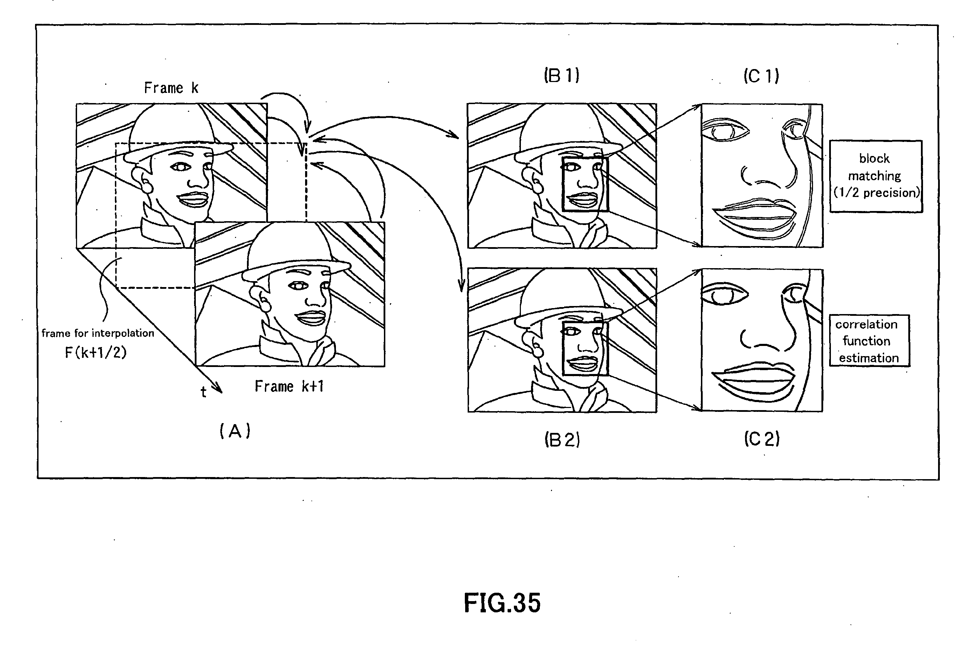

Fig.35 shows the concept of a one-dimensional image interpolation from two consecutive frames.

Motion evaluation is by an algorithm of full-retrieval block matching whose block size and retrieval window size are known.

A high resolution frame pixel is represented by f($\tau$x, $\tau$y). Its pixel structure is shown in an example of high resolution interpolation approach shown in Fig.34.

In a first step, two consecutive frames are obtained from a video sequence and are expressed as $f_1(x, y)$ and $f_2(x, y)$.

In a second step, an initial estimation of a motion vector is made.

The initial estimation of the motion vector is made by:

[Equation 54]

$$v_r = \arg\max_{(u,v)} \left[ \tilde{v}(u,v) \right]$$

where

[Equation 55]

$$\hat{v}(u,v) = \frac{\sum_{x,y} \left[ f_1(x,y) - \bar{f}_{wa} \right] \left[ f_2(x+u,x+v) - \bar{f}_{ta} \right]}{\left[ \sum_{x,y} \left[ f_1(x,y) - \bar{f}_{wa} \right]^2 \left[ f_2(x+u,x+v) - \bar{f}_{ta} \right]^2 \right]^{0.5}} \qquad (18)$$

in which equation (18):

[Equation 56]

$$\bar{f}_{wa}$$

represents an average value of search windows, and

[Equation 57]

$$\bar{f}_{ta}$$

represents an average value of current block in matching.

In a third step, for the total of the pixels that use the equations (12) and (17):

[Equation 58]

$$\hat{v} = \left( \hat{v}_x, \hat{v}_y \right)$$

a motion vector is obtained from a sole pixel in the neighborhood of the motion vector from the second step:
$$[\text{Equation 59}]$$

$$v_r$$

In a fourth step, the uniform horizontal interpolation is executed as follows:
$$[\text{Equation 60}]$$

$$
\begin{aligned}
f_1(\tau_x, y_j) &= \sum_{i=1}^{4} f_1(x_i, y_j) h_f(\tau_x - x_i) \ (j = 1,2) \\
f_2(\tau_x, y_j - \hat{v}_y) &= \sum_{i=1}^{4} f_2(x_i - \hat{v}_x, y_j - \hat{v}_y) \\
&\quad \times h_f(\tau_x - x_i + \hat{v}_x) \ (j = 1,2)
\end{aligned}
\tag{19}
$$

In a fifth step, the non-uniform vertical interpolation that uses the pixel obtained in the fourth step is executed in accordance with the equation (20):
$$[\text{Equation 61}]$$

$$
\begin{aligned}
f(\tau_x, \tau_y) &= \sum_{j=1}^{2} f_1(\tau_x, y_j) h_n(\tau_y - y_j) \\
&\quad + \sum_{j=1}^{2} f_2(\tau_x, y_j - v_y) h_n(\tau_y - y_j + v_y)
\end{aligned}
\tag{20}
$$

The fourth and fifth steps are repeated with a high resolution for the total of the pixels.

In the encoding of moving pictures, which is based on the fluency theory, a signal space suited to the original signal is selected and render-into-function processing is carried out, whereby high compression may be accomplished as sharpness is maintained.

The function space, to which belongs the frame-to-frame-to-frame correlation function, is accurately determined, whereby the motion vector may be found to optional precision.

In the encoding of moving pictures, which is based on the fluency function, a signal space suited to the original signal is selected and render-into-function processing is carried out, whereby high compression may be accomplished as sharpness is maintained.

The frame-to-frame corresponding points are traced and temporal transitions thereof are expressed in the form of the function, such as to generate a frame for interpolation, expressed by a function, based on the number ratio of the original frame and frames for conversion. By so doing, a clear picture signal with smooth motion may be obtained at a frame rate suited to a display unit.

Suppose that a frame is to be generated at an optional time point between a frame k and a frame k+1, as shown in Fig.35(A), and that, in this case, a frame for interpolation F(k+1/2) is generated by uniform interpolation to find the motion information by 1/2 precision motion estimation, as conventionally. Also suppose that, using the motion information, thus obtained, the gray scale value of a corresponding point is generated by 1/2 precision by block matching, again as conventionally, by way of performing the frame rate enhancing processing. In this case, a picture of the frame for interpolation introduced undergoes deterioration in picture quality in the moving picture portion, as shown in Fig.35 (B1) and (C1). However, in the frame rate enhancing processing, performed using the frame rate enhancing unit 40, it is possible to enhance the frame rate without the moving picture portion undergoing deterioration in picture quality, as shown in Fig.35 (B2), (C2). In this frame rate enhancing processing, the gray scale value of the corresponding point of the frame for interpolation is generated by uniform interpolation with the use of the gray scale value of the corresponding point as estimated by the processing of corresponding point estimation, and further by generating the gray scale value of the corresponding point by non-uniform interpolation, as described above.

In the present picture signal conversion system 100, the input picture information at the picture input unit 10, such as picture pickup device, is freed of noise by the pre-processor 20. The picture information thus freed of noise by the pre-processor 20 is encoded for compression by the compression encoding processor 30. The frame rate enhancing unit 40 traces the frame-to-frame corresponding points. The frame rate enhancing unit then expresses the temporal transitions thereof by a function to generate a frame for interpolation, by a function, based on the number ratio of the original frame and the frames for conversion. By so doing, the picture information encoded for compression by the compression encoding processor 30 is enhanced in its frame rate, thus generating a clear picture signal showing a smooth movement.

**Claims**

1. A frame rate conversion device comprising:

   a corresponding point estimation processor for estimating, for each of a large number of pixels in a reference frame, a corresponding point in each of a plurality of picture frames differing in time;
   a first processor of gray scale value generationof finding, for each of the corresponding points in each picture frame estimated, the gray scale value of each corresponding point from gray scale values indicating the gray level of neighboring pixels;
   a second processor of gray scale value generation of approximating, for each of said pixels in said reference frame, from the gray scale values of the corresponding points in said picture frames estimated, the gray scale value of the locus of said corresponding points by a fluency function, and of finding, from said function, the gray scale values of the corresponding points of a frame for interpolation; and
   a third processor of gray scale value generation of generating, from the gray scale value of each corresponding point in said picture frame for interpolation, the gray scale value of neighboring pixels of each corresponding point in said frame for interpolation.

2. The frame rate conversion device according to claim 1, further comprising:

   first partial region extraction means for extracting a partial region in said frame picture;
   second partial region extraction means for extracting a partial region of another frame picture consecutive to said frame picture; said partial region of said another frame picture being similar to said partial region extracted by said first partial region extraction means;
   function approximation means for selecting said partial regions extracted by said first and second partial region extraction means so that said partial regions will have the same picture state, and for expressing the gray scale values of each of said partial regions converted by a function with a piece-wise polynomial to output the function;
   correlation value calculation means for calculating the correlation values of said functions output by said function approximation means; and
   offset value calculation means for calculating a position offset from a picture position that yields the maximum value of correlation calculated by said correlation value calculation means to output the calculated value as an offset value of said corresponding point.

3. A frame rate conversion device comprising:

   a first function approximation unit for approximating the gray scale distribution of a plurality of pixels in reference frames by a function;
   a corresponding point estimation unit for performing correlation calculations, using a function of gray scale distribution, approximated by said first function approximation unit in a plurality of said reference frames differing in time to set respective positions that yield the maximum value of the correlation as the corresponding point positions in said respective reference frames;
   a second function approximation unit for putting corresponding point positions in each reference frame as estimated by said corresponding point estimation unit into the form of coordinates in terms of the horizontal and vertical distances from the point of origin of each reference frame, converting changes in the horizontal and vertical positions of said coordinate points in said reference frames different in time into time-series signals, and approximating the time-series signals of said reference frames by a function; and

a third function approximation unit for setting, for a picture frame of interpolation at an optional time point between said reference frames, a position in said picture frame for interpolation corresponding to the corresponding point positions in said reference frames, using said function approximated by said second function approximation unit; said third function approximation unit finding a gray scale value at said corresponding point position of said picture frame for interpolation by interpolation with gray scale values at the corresponding points of said reference frames; said third function approximation unit causing said first function approximation to fit with the gray scale value of the corresponding point of said picture frame for interpolation to find the gray scale distribution in the neighborhood of said corresponding point to convert the gray scale distribution in the neighborhood of said corresponding point into the gray scale values of said pixel points in said picture frame for interpolation.

4. The frame rate conversion device according to claim 3, wherein

said corresponding point estimation unit includes

first partial region extraction means for extracting a partial region of a frame picture;

second partial region extraction means for extracting a partial region of another frame picture consecutive to said frame picture; said partial region of said another frame picture being similar to said partial region extracted by said first partial region extraction means;

function approximation means for selecting said partial regions extracted by said first partial region extraction means and by said second partial region extraction means so that said partial regions will have approximately the same picture state, and for expressing the gray scale values of each of said partial regions converted by a function with a piece-wise polynomial to output the function;

correlation value calculation means for calculating the correlation value of the outputs of said function approximation means; and

offset value calculation means for calculating the position offset of a picture that will give a maximum value of correlation as calculated by said correlation value calculation means; said offset value calculation means outputting the calculated value as an offset value of the corresponding point.

5. A corresponding point estimation device mounted as a corresponding point estimation processor in the frame rate conversion device according to claim 1 or 3, said corresponding point estimation device comprising:

first partial region extraction means for extracting a partial region of a frame picture;

second partial region extraction means for extracting a partial region of another frame picture consecutive to said frame picture; said partial region being similar to said partial region extracted by said first partial region extraction means;

function approximation means for selecting said partial regions extracted by said first and second partial region extraction means so that said partial regions will have approximately the same picture state, and for expressing the gray scale values of each of said partial regions converted by a function with a piece-wise polynomial to output the function;

correlation value calculation means for calculating the correlation value of outputs of said function approximation means; and

offset value calculation means for calculating an offset value of a picture that gives a maximum value of correlation calculated by said correlation value calculation means to output the calculated value as an offset value of the corresponding point.

6. A method for estimation of a corresponding point executed by said corresponding point estimation device according to claim 5, said method comprising;

a first partial region extraction step of extracting a partial region of said frame picture;

a second partial region extraction step of extracting a partial region of another frame picture consecutive to said frame picture; said partial region being similar to said partial region extracted in said first partial region extraction step;

a function approximation step of converting said partials regions extracted in said first and second partial region extraction steps so said partial regions will have corresponding picture state, and for expressing the gray scale values of each of said partial regions converted by said function with a piece-wise polynomial to output the function;

a correlation value calculation step of calculating a correlation value of an output obtained by said function approximation step; and

an offset value calculation step of calculating an offset value of a picture that gives a maximum value of correlation calculated in said correlation value calculation step to output the maximum value calculated as an offset value of said corresponding point.

7. A program for allowing a computer, provided in the corresponding point estimation device according to claim 5, to operate as

first partial region extraction means for extracting a partial region in said frame picture;

second partial region extraction means for extracting a partial region of another frame picture consecutive to said frame picture; said partial region of said another frame picture being similar to said partial region extracted by said first partial region extraction means;

function approximation means for selecting the said partial regions extracted by said first and second partial region extraction means so that said partial regions will have corresponding picture state, and for expressing the gray scale values of each of said partial regions converted by said function with a piece-wise polynomial to output the function;

correlation value calculation means for calculating the correlation value of outputs of said function approximation means; and

offset value calculation means for calculating a picture position offset that yields the maximum value of correlation calculated by said correlation value calculation means to output the calculated value as an offset value of said corresponding point.

FIG.1

**FIG.2A**

low frame rate moving picture

**FIG.2B**

high frame rate moving picture

original frame

interpolated frame

```
            ( Start )
                │
                ▼
  ┌─────────────────────────┐ ~S 1
  │   corresponding point   │
  │   estimation processing │
  └─────────────────────────┘
                │
                ▼
  ┌─────────────────────────┐ ~S 2
  │    first gray scale value│
  │    generation processing │
  └─────────────────────────┘
                │
                ▼
  ┌─────────────────────────┐ ~S 3
  │   second gray scale value│
  │   generation processing  │
  └─────────────────────────┘
                │
                ▼
  ┌─────────────────────────┐ ~S 4
  │    third gray scale value│
  │    generation processing │
  └─────────────────────────┘
                │
                ▼
            ( End )
```

# FIG.3

FIG.4A

reference frame F(k)

F(k+1)

corresponding point Pn(k+1)

Pn(k)

motion vector MV

t

t=k          t=k+1

FIG.4B

corresponding point Pn

Pn(k)

Pn(k+1/2)

Pn(k+1)

FIG.4C

t

t=k  t=k+1/2   t=k+1

reference frame F(k)

F(k+1/2)

Pn(k+1/2)

Pn(k+1)

F(k+1)

Pn(k)

t

t=k      t=k+1/2      t=k+1

FIG.4D

F(k+1/2)

non-uniform interpolation

(A)

first frame(F$_1$)

(C)

(B)

second frame(F$_2$)

FIG.5

EP 2 330 818 A1

FIG.6

EP 2 330 818 A1

$^3_{[e]}\psi(t)$

uniform interpolation function

# FIG.7A

$h_n(x)$

$s_3(x)$   $s_5(x)$   $s_6(x)$

$s_4(x)$

$s_7(x)$

$s_1(x)$ $s_2(x)$   $s_8(x)$

time(t)

non-uniform interpolation function

# FIG.7B

FIG.8

$\underline{50}$

53

SRAM

51

input picture → input data control circuit

~54

SRAM selector

52

horizontal/ vertical synchronization signals

output synchronization signal generation circuit

frame 1 ($F_1$)　　frame 2 ($F_2$)

~55

external input signal → picture processing module

output value synchronization signal

output pixel

**FIG.9**

FIG.10

55

55A window setting unit

Extraction pixel

55D offset value estimation unit

offset value vector

55C second uniform interpolation processing unit

55E offset value correction unit

pixel for interpolation

55F non-uniform interpolation processor

output pixel

55B first uniform interpolation processing unit

pixel for interpolation

original pixel

original pixel

frame 2 ($F_2$)

frame 1 ($F_1$)

FIG.11

**FIG.12A**

frame picture f

**FIG.12B**

frame picture g

input pictures of frames 1 and 2 — step A

calculate offset values ( $\tau x$, $\tau y$) of frames 1, 2 — step B

Enlarge pixel of frame 1 in horizontal or vertical direction; calculate intrapolated pixel value by uniform interpolation — step C

Enlarge picture of frame 2 in horizontal or vertical direction; calculate intrapolated pixel value by uniform interpolation — step D

calculate pixel values at pixel positions obtained after shifting enlarged picture of frame 2 by offset value relative to frame 1 — step E

do enlarging calculations by non-uniform interpolation in the vertical or horizontal direction of pixel values at desired positions in frame 1 from two intrapolated pixel values of frame 1 and two pixel values at shifted positions in frame 2, totaling at four pixel values — step F

output result of interpolation calculations of frame 1 as enlarged picture — step G

# FIG.13

FIG.14

100

10

input unit

picture

sound

20
pre-processor

30
compression
encoding
processor

40
frame rate
enhancing unit

FIG.15

2 1

true input picture (unknown) f(x, y) → deterioration model; blurred picture(PSF) H(x,y)

$\tilde{f}(x, y)$

⊕ → observed picture g(x, y)

noise n(x, y)

**FIG.16**

2 2

observed picture g(x, y) → reverse filter → estimated picture $\tilde{f}(x, y)$

**FIG.17**

**FIG.18**

FIG.19

input picture

311 — first partial region extraction unit

second partial region extraction unit — 312

function approximating unit — 313

correlation value estimation unit — 314

offset value calculation unit — 315

offset value

31A

## FIG.20

$\hat{c}(\tau)$          k

## FIG.21

FIG.22A

Frame(k)

FIG.22B

Frame(k+1)

FIG.22C

maximum value Pk

$r(\tau_1, \tau_2)$

FIG.22D

Frame(k)

object motion (rotation)

frame 2
(F2)

frame 1
(F1)

(A)

tetra-tupled enlargement by 2-frame
corresponding point estimation and
non-uniform interpolation

estimated corresponding point
(partial)

(B1)

(B2)

(C1) conventional method
(quadratic polynomial interpolation)

(C2) proposed
(correlation function method)

FIG.23

X-coordinate

Y-coordinate

frame

FIG.24

## FIG.25A

frame 1　　frame 2　　frame 3　　frame 4　　frame 5

## FIG.25B

maximum point

X-coordinate

0

1　2　3　4　5　　　　10　　　　　　　　　20

reference frame number $N_{REF}$

## FIG.25C

maximum point

Y-coordinate

0

1　2　3　4　5　　　　10　　　　　　　　　20

reference frame number $N_{REF}$

EP 2 330 818 A1

FIG.26

| S | I | B | B | P | B | B | P | B | B | P | B | B | P | B | B | P | B | B | P | B | B | S | I | B | B | P | B | B | P | B | B | P | B | B | P | B | B | P | B | B | S | · | · |

GOP ◄──────────────────────────────► GOP ◄──────────────────────────────►

## FIG.27A

| S | I | D | Q | D | Q | D | Q | D | Q | D | Q | D | Q | S | I | D | Q | D | Q | D | Q | D | Q | D | Q | D | Q | S | I | D | Q | D | Q | D | Q | D | Q | D | Q |

GOP ◄──────────────────────────────► GOP ◄──────────────────────────────►

## FIG.27B

**FIG.28**

| position | number of bytes | data | meaning |
|---|---|---|---|
| fff[0] | 4 | 808470086 | header "FF00" |
| fff[1] | 4 | 400 | picture width |
| fff[2] | 4 | 347 | picture height |
| fff[3] | 1 | 1 | object sort and contour (PATH) |
| fff[4] | 1 | 19=BIN[0010011] | segment sort: 1= start point, coordinate precision: 1 = 8 bits, coordinate: 1 −absolute coordinate |
| fff[5] | 1 | 2 | x−coordinate of start point |
| fff[6] | 1 | 3 | y−coordinate of start point |
| fff[7] | 1 | 55=BIN[0110111] | segment sort: 3= arc, coordinate precision: 3=16 bit, coordinate: 1 −absolute coordinate |
| fff[8] | 2 | 200 | x−coordinate of median point |
| fff[9] | 2 | 348 | y−coordinate of median point |
| fff[10] | 2 | 399 | x−coordinate of end point |
| fff[11] | 2 | 692 | y−coordinate of end point |
| fff[12] | 1 | 39=BIN[0100111] | segment sort: 2 = line segment, coordinate precision: 3=16 bit, coordinate: 1 −absolute coordinate |
| fff[13] | 2 | 400 | x−coordinate of start point |
| fff[14] | 2 | 692 | y−coordinate of start point |
| fff[15] | 1 | 55=BIN[0110111] | segment sort: 3= arc, coordinate precision: 3 =16 bit, coordinate: 1 −absolute coordinate |
| fff[16] | 2 | 600 | x−coordinate of median point |
| fff[17] | 2 | 348 | y−coordinate of median point |
| fff[18] | 2 | 798 | x−coordinate of end point |
| fff[19] | 2 | 2 | y−coordinate of end poin |
| fff[20] | 1 | 35=BIN[0100011] | segment sort: 3 = line segment, coordinate precision: 1 = 8 bit, coordinate: 1 −absolute coordinate |
| fff[21] | 1 | 3 | x−coordinate of start point |
| fff[22] | 1 | 2 | y−coordinate of start point |
| fff[23] | 1 | 35=BIN[0100011] | segment sort: 2 = line segment, coordinate precision: 1 = 8 bits, coordinate: 1 −absolute coordinate |
| fff[24] | 1 | 2 | x−coordinate of end point |
| fff[25] | 1 | 3 | y−coordinate of end point |
| fff[26] | 1 | 0 | segment sort: 0 = end |
| fff[27] | 1 | 2 | object sort: region (REGION) |
| fff[28] | 1 | 0 | Blue |
| fff[29] | 1 | 0 | Green |
| fff[30] | 1 | 0 | Red |
| fff[31] | 1 | 2=BIN[0010] | number of D bits: 1 = 8 bits |
| fff[32] | 1 | 1 | pathid |
| fff[33] | 1 | 0 | region end |
| fff[34] | 1 | 0 | object end |

EP 2 330 818 A1

| number of times of frame division | number of regions in frame | number of corresponding regions | center x-coordinate of corresponding region of previous I or G | center y-coordinate of corresponding region of previous I or G | center x-coordinate of corresponding region of rear I or G | center y-coordinate of corresponding region of rear I or G |
|---|---|---|---|---|---|---|
| 3 | 4 | 1 | 100 | 150 | 130 | 120 |
| | | 2 | 500 | 160 | 450 | 160 |
| | | 3 | 850 | 320 | 950 | 280 |
| | | 4 | 1100 | 460 | 1020 | 500 |

FIG.29

EP 2 330 818 A1

FIG.30A

FIG.30B

FIG.31

FIG.32

FIG.33

$f_1(x_{i-1}, y_j)\, \nu_x$

$f_1(x_i, y_j)$

$f_1(x_{i+1}, y_j)$

$f_1(x_{i+2}, y_j)$

$Px_{F1}$

$Px_{F2}$

$f_2(x_{i-1} + \nu_x, y_j + \nu_y)$

$f(\tau_x, \tau_y)$

$Px_{Tg}$

$f_1(x_{i+1}, y_{j+1})$

$f_1(x_i, y_{j+1})$

$f_1(x_{i+1}, y_{j+1})$

$f_1(x_{i+2}, y_{j+1})$

$Px_{F1}$  Frame_1 pixel

$Px_{F2}$  Frame_2 pixel

● Target pixel $(Px_{Tg})$

FIG.34

EP 2 330 818 A1

Frame k

frame for interpolation
F(k+1/2)

t

Frame k+1

(A)

(B1)

(C1)

block
matching
(1/2 precision)

(B2)

(C2)

correlation
function
estimation

FIG.35

<table>
<tr><td colspan="2">**INTERNATIONAL SEARCH REPORT**</td><td>International application No.<br>PCT/JP2009/062948</td></tr>
</table>

| A. CLASSIFICATION OF SUBJECT MATTER |
|---|
| H04N7/01(2006.01)i |

According to International Patent Classification (IPC) or to both national classification and IPC

| B. FIELDS SEARCHED |
|---|
| Minimum documentation searched (classification system followed by classification symbols)<br>H04N7/01 |

Documentation searched other than minimum documentation to the extent that such documents are included in the fields searched
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

| C. DOCUMENTS CONSIDERED TO BE RELEVANT |

| Category* | Citation of document, with indication, where appropriate, of the relevant passages | Relevant to claim No. |
|---|---|---|
| A | JP 2008-99281 A (Thomson Licensing),<br>24 April 2008 (24.04.2008),<br>entire text; all drawings<br>& US 2008/0089419 A1 & EP 1912172 A1 | 1-7 |
| A | JP 2002-199400 A (Victor Company Of Japan,<br>Ltd.),<br>12 July 2002 (12.07.2002),<br>entire text; all drawings<br>(Family: none) | 1-7 |
| A | JP 4-246992 A (Sony Corp.),<br>02 September 1992 (02.09.1992),<br>entire text; all drawings<br>& US 5337153 A | 1-7 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>    09 October, 2009 (09.10.09) | Date of mailing of the international search report<br>    20 October, 2009 (20.10.09) |
|---|---|
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/062948

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-68515 A  (Kazuo TORAICHI, Koichi WADA), 09 March 1999 (09.03.1999), entire text; all drawings (Family: none) | 1-7 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008227626 A
- JP 2008227627 A
- JP 2008988033 A
- JP 2003284007 A
- JP 2003167103 A